# EUROPEAN PATENT APPLICATION

(11) **EP 4 753 337 A1**
(43) Date of publication of application: **03.06.2026**
(21) Application number: 25784572.7
(22) Date of filing: 29.09.2025
(51) Int. Cl.: H04W 48/16, H04L 5/00, H04W 72/20, H04W 8/00, H04W 76/14, H04W 84/12, H04W 4/80, H04L 67/51

(54) **ELECTRONIC DEVICE FOR PERFORMING NAN COMMUNICATION AND SHORT-RANGE WIRELESS COMMUNICATION THROUGH DFS CHANNEL, AND OPERATION METHOD OF ELECTRONIC DEVICE**

(30) Priority: 11.10.2024 KR 20240138334; 25.10.2024 KR 20240147324
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR); LEE, Sunkee, Suwon-si, Gyeonggi-do 16677 (KR)
(74) Representative: Gulde & Partner
(86) International application number: PCT/KR2025/015374
(87) International publication number: WO 2026/079778

(57) **Abstract**

In an electronic device and an operating method thereof according to an embodiment, the electronic device may include a communication circuitry supporting short-range wireless communication and neighbor awareness network (NAN) communication; a memory storing at least one computer program; and at least one processor. The at least one computer program may include instructions that, when executed by the at least one processor individually or collectively, cause the electronic device to be connected to an access point (AP) supporting dynamic frequency selection (DFS) through a DFS channel, transmit, to an external electronic device, a service discovery frame including information related to the DFS channel in a process of discovering the external electronic device to be connected via an NAN data path (NDP), establish the NDP with the external electronic device through a channel different from the DFS channel and perform the NAN communication with the external electronic device based on schedule information related to the NDP, and after establishing the NDP, upon receiving, from the external electronic device, information indicating that the external electronic device is capable of receiving a signal being transmitted from the AP through the DFS channel, perform the NAN communication and the short-range wireless communication based on updated schedule information.

## Description

### [Technical Field]

The disclosure relates to an electronic device and an operating method thereof, and relates to an electronic device that performs neighbor awareness network (NAN) communication and short-range wireless communication through a dynamic frequency selection (DFS) channel.

### [Background Art]

With the proliferation of various electronic devices, advancements in wireless communication speeds for these devices have been realized.

In addition, various types of proximity services utilizing low-power discovery technology are currently being developed. For example, proximity services (or proximity communication services) that allow neighboring electronic devices to quickly exchange data through a proximity network are being developed. The proximity services may include low-power proximity services using Bluetooth low energy (BLE) beacons, or low-power proximity services based on wireless local area network (WLAN)-based low-power short-range communication technologies (e.g., neighbor awareness networking (NAN), Wi-Fi aware) (hereinafter referred to as 'NAN').

According to an embodiment, an NAN-based low-power proximity service (hereinafter referred to as "proximity service") refers to a service that utilizes a proximity network that dynamically changes according to the movement of an electronic device, and a set of electronic devices that constitutes a proximity network may be referred to as a cluster. In the case of the proximity service, electronic devices included in the cluster may transmit and receive a signal for discovery (e.g., a beacon) and a service discovery frame (SDF) (hereinafter referred to as "SDF") within a synchronized time duration (communication period). For example, at least one electronic device within the cluster may transmit a signal to indicate the cluster's presence, and a new electronic device attempting to join the cluster may receive that signal.

Each electronic device in the cluster may configure different active durations for transmitting and receiving signals in order to reduce current consumption (or power consumption). In NAN communication, the active duration during which signals can be transmitted and received may be referred to as a discovery window (DW). In addition, electronic devices included in the cluster may reduce current consumption by maintaining a low-power state (e.g., sleep state) during periods excluding the discovery window.

Recently, electronic devices that support short-range wireless communication can perform short-range wireless communication using channels with relatively low congestion (or channel utilization). According to an example, the electronic device can perform short-range wireless communication using a dynamic frequency selection (DFS) channel.

Dynamic frequency selection may refer to a technology that enables performing short-range wireless communication through a DFS channel, which is a channel used for various purposes (e.g., military purposes or weather observation purposes). The DFS channel may have relatively low congestion (or channel utilization) compared to other channels, and the performance of short-range wireless communication through the DFS channel may be higher than the performance of short-range wireless communication using other channels. Short-range wireless communication using the DFS channel is increasingly being applied to a variety of short-range wireless communications.

### [Disclosure of Invention]

### [Technical Problem]

The electronic device may use the DFS channel when performing device-to-device communication with an external electronic device. The electronic device may transmit information related to the DFS channel to the external electronic device in order to perform short-range wireless communication (e.g., Wi-Fi direct) with the external electronic device via the DFS channel. The external electronic device may identify whether it can receive a signal being transmitted from an AP connected to the electronic device through a plurality of DFS channels, and if it discovers a channel capable of receiving the signal transmitted from the AP, it may transmit information indicating the discovered channel to the electronic device. The electronic device may perform short-range wireless communication with the external electronic device via the DFS channel, based on identifying that the discovered channel is the same as the DFS channel between the AP and the electronic device. However, the time required to identify whether the signal being transmitted from the AP included in the information related to the DFS channel can be received through each of the plurality of DFS channels may be very long, and the quality of a service using short-range wireless communication may be degraded. Furthermore, neighbor awareness network (NAN) communication using the DFS channel has not yet been considered.

The technical problems to be solved in embodiments of the disclosure are not limited to those mentioned above, and other technical problems not mentioned can be clearly understood from the description below by a person skilled in the technical field to which the disclosure belongs.

### [Solution to Problem]

An electronic device according to an embodiment may include a communication circuitry supporting short-range wireless communication and neighbor awareness network (NAN) communication. The electronic device may include a memory storing at least one computer program. The electronic device may include at least one processor. Instructions included in the at least one computer program may cause, when executed by the at least one processor individually or collectively, the electronic device to connect to an access point (AP) supporting dynamic frequency selection (DFS) through a DFS channel. The instructions may cause, when executed by the at least one processor individually or collectively, the electronic device to transmit, to an external electronic device, a service discovery frame including information related to the DFS channel in a process of discovering the external electronic device to be connected via an NAN data path (NDP). The instructions may cause, when executed by the at least one processor individually or collectively, the electronic device to establish the NDP with the external electronic device through a channel different from the DFS channel and perform the NAN communication with the external electronic device based on schedule information related to the NDP. The instructions may cause, when executed by the at least one processor individually or collectively, the electronic device to, after establishing the NDP, upon receiving, from the external electronic device, information indicating that the external electronic device is capable of receiving a signal being transmitted from the AP through the DFS channel, perform the NAN communication and the short-range wireless communication based on updated schedule information. The updated schedule information may enable the electronic device and the external electronic device to perform the NAN communication during a first period between discovery windows and perform the NAN communication and the short-range wireless communication during a second period between the discovery windows.

In a recording medium storing at least one program including instructions that, when executed by at least one processor of an electronic device individually or collectively, cause the electronic device to perform operations, the instructions may cause, when executed by the at least one processor individually or collectively, the electronic device to connect to an access point (AP) supporting dynamic frequency selection (DFS) through a DFS channel. The instructions may cause, when executed by the at least one processor individually or collectively, the electronic device to transmit, to an external electronic device, a service discovery frame including information related to the DFS channel in a process of discovering the external electronic device to be connected via a neighbor awareness network (NAN) data path (NDP) of NAN communication. The instructions may cause, when executed by the at least one processor individually or collectively, the electronic device to establish the NDP with the external electronic device through a channel different from the DFS channel and perform the NAN communication with the external electronic device based on schedule information related to the NDP. The instructions may cause, when executed by the at least one processor individually or collectively, the electronic device to, after establishing the NDP, upon receiving, from the external electronic device, information indicating that the external electronic device is capable of receiving a signal being transmitted from the AP through the DFS channel, perform the NAN communication and the short-range wireless communication based on updated schedule information. The updated schedule information may enable the electronic device and the external electronic device to perform the NAN communication during a first period between discovery windows and perform the NAN communication and the short-range wireless communication during a second period between the discovery windows.

An operating method of an electronic device according to an embodiment may include an operation of connecting to an access point (AP) supporting dynamic frequency selection (DFS) through a DFS channel. The operating method of the electronic device may include an operation of transmitting, to an external electronic device, a service discovery frame including information related to the DFS channel in a process of discovering the external electronic device to be connected via a neighbor awareness network (NAN) data path (NDP) of NAN communication. The operating method of the electronic device may include an operation of establishing the NDP with the external electronic device through a channel different from the DFS channel and performing the NAN communication with the external electronic device based on schedule information related to the NDP. The operating method of the electronic device may include an operation of, after establishing the NDP, upon receiving, from the external electronic device, information indicating that the external electronic device is capable of receiving a signal being transmitted from the AP through the DFS channel, performing the NAN communication and the short-range wireless communication based on updated schedule information. The updated schedule information may enable the electronic device and the external electronic device to perform the NAN communication during a first period between discovery windows and perform the NAN communication and the short-range wireless communication during a second period between the discovery windows.

### [Advantageous Effects of invention]

An electronic device and an operating method thereof according to an example can transmit a service discovery frame including information related to a DFS channel to an external electronic device in a process of configuring an NAN data path (NDP). The external electronic device can identify whether a signal being transmitted by an AP can be received through the DFS channel, based on the information related to the DFS channel, and can transmit, to the electronic device, information indicating that the signal transmitted by the AP can be received through the DFS channel. The electronic device can configure the NDP using the DFS channel, based on the fact that the external electronic device can receive the signal transmitted from the AP through the DFS channel. Accordingly, the electronic device can perform NAN communication through the DFS channel with a relatively low congestion, thereby implementing a higher transmission speed and/or reception speed.

An electronic device and an operating method thereof according to an example can configure an NDP using a channel different from a DFS channel. After configuring the NDP, the electronic device can receive, from an external electronic device, information indicating that a signal transmitted by an AP can be received through the DFS channel, and based on receiving the information indicating that the signal transmitted by the AP can be received through the DFS channel, the electronic device can change (or update) schedule information so that NAN communication and short-range wireless communication can be performed through the DFS channel. Accordingly, the electronic device can reduce the time required for configuring the NAN communication by establishing the NDP before identifying whether the signal transmitted by the AP included in DFS channel related information can be received through each of a plurality of DFS channels, which consumes a relatively long time.

The effects obtainable from the disclosure are not limited to those mentioned above, and other effects not mentioned can be clearly understood from the description below by a person skilled in the art to which the disclosure belongs.

### [Brief Description of Drawings]

FIG. 1 is a block diagram of an electronic device according to an embodiment.
FIG. 2 is a diagram illustrating a neighbor awareness network (NAN) cluster according to an embodiment.
FIG. 3 is a diagram illustrating a protocol for transmitting a signal of an electronic device included in an NAN cluster according to an embodiment.
FIG. 4 is a diagram illustrating an example of data transmission and reception within an NAN cluster according to an embodiment.
FIG. 5A is a diagram illustrating an electronic device and an external electronic device according to an embodiment.
FIG. 5B is a diagram illustrating an example of an electronic device and an external electronic device performing NAN communication and short-range wireless communication according to an embodiment.
FIG. 6 is a block diagram of an electronic device according to an embodiment.
FIG. 7 is a diagram illustrating schedule information for an electronic device performing NAN communication and short-range wireless communication, according to an embodiment.
FIG. 8 is a diagram illustrating an example in which an electronic device updates schedule information based on information related to a DFS channel received from an external electronic device, according to an embodiment.
FIG. 9 is a diagram illustrating an example in which an electronic device changes an operating channel based on information related to a DFS channel received from an external electronic device, according to an embodiment.
FIG. 10 is a flowchart illustrating an operating method of an electronic device according to an embodiment.

### [Mode for the Invention]

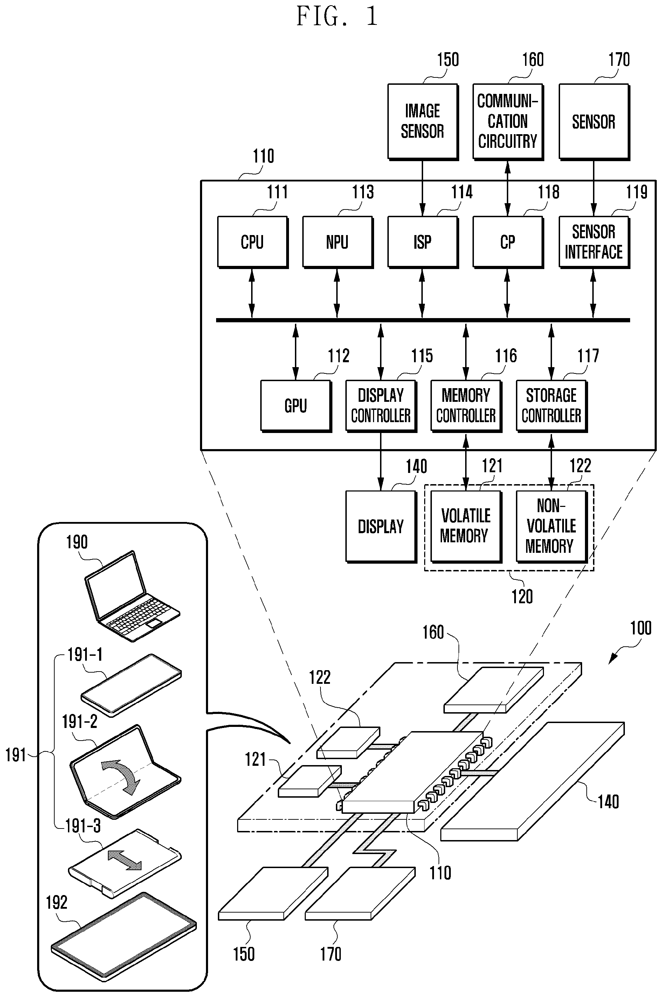

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

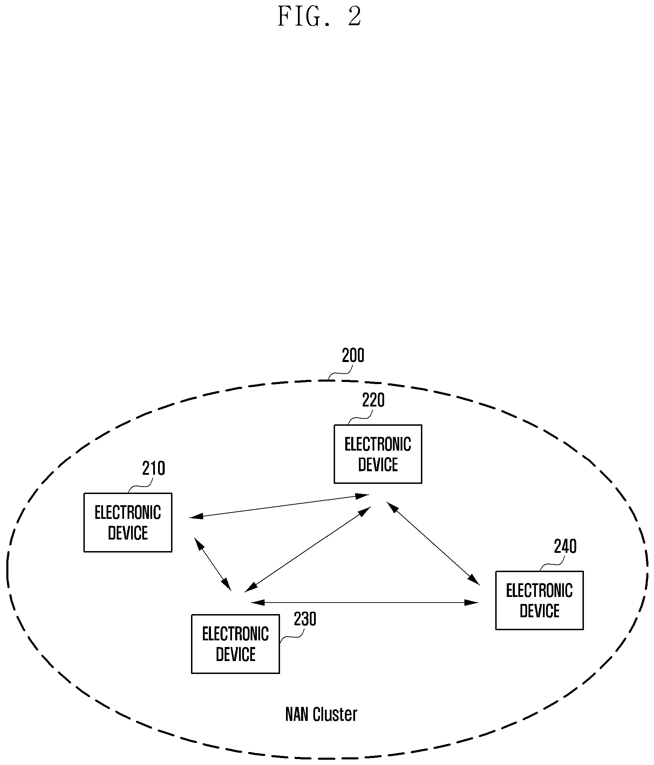

FIG. 2 is a diagram illustrating a neighbor awareness network (NAN) cluster according to various embodiments.

For example, FIG. 2 may illustrate an example configuration of a neighbor awareness networking (NAN) cluster 200 for a proximity network according to various embodiments. In the following description, the cluster 200 may refer to a set of electronic devices 210, 220, 230, and 240 that constitute a proximity network so that the respective electronic devices (or NAN devices) 210, 220, 230, and 240 (e.g., the electronic device 100 in FIG. 1) can transmit and receive data to and from each other. For example, the cluster 200 may be referred to as an NAN cluster in accordance with an NAN specification (or standard).

With reference to FIG. 2, the cluster 200 may be composed of a plurality of electronic devices 210, 220, 230, and 240. The electronic devices 210, 220, 230, and 240 included in the cluster 200 may exchange, e.g., transmit and receive, one or more discovery signals. Examples for the discovery signals include a beacon (or discovery beacon) and/or a service discovery frame (SDF) (hereinafter, referred to as "SDF"). The one or more discovery signals may be exchanged within a synchronized time duration (communication period) (e.g., a discovery window (DW)). For a facilitated understanding, SDF and beacons are used herein as exemplary discovery signals, wherein it is understood that the references made hereto apply in analogy to other configurations of one or more discovery signals.

The electronic devices 210, 220, 230, and 240 included in the cluster 200 may have their time clocks synchronized with each other. For example, the electronic devices 210, 220, 230, and 240 may be synchronized to the time clock of one electronic device (e.g., the electronic device 210) and exchange beacons and SDFs with each other in the same discovery window.

According to an embodiment, an electronic device that supports a low-power short-range communication technology based on NAN may broadcast a discovery signal (e.g., a beacon) to discover another electronic device every preconfigured first period (e.g., about 100msec) and perform scanning every preconfigured second period (e.g., about 10msec) to receive a discovery signal broadcast from another electronic device.

The electronic device 210, 220, 230, or 240 may detect at least one other electronic device located nearby, based on the discovery signal received through scanning, and perform NAN cluster synchronization with the detected at least one other electronic device. The NAN cluster synchronization may include an operation of receiving time clock information of an electronic device representing an NAN cluster so that electronic devices included in the NAN cluster transmit and/or receive data on the same channel and/or during the same time.

For example, as illustrated in FIG. 2, each of the plurality of electronic devices 210, 220, 230, and 240 may transmit and receive a beacon to and from other electronic devices 210, 220, 230, and 240, thereby forming the cluster 200 that operates according to a synchronized time clock, and the electronic devices 210, 220, 230, and 240 within the cluster 200 may perform NAN cluster synchronization.

The NAN cluster synchronization may be performed based on the time and channel of the electronic device with the highest master preference within the cluster 200. For example, the electronic devices 210, 220, 230, and 240 within the cluster 200 formed through discovery may exchange signals regarding master preference information indicating a preference for operating as an anchor master, and the electronic device with the highest master preference may be determined as the anchor master (master electronic device) through the exchanged signals.

The anchor master may refer to an electronic device that serves as a reference for time and channel synchronization of the electronic devices 210, 220, 230, and 240 within the cluster 200. The anchor master may be changed according to the master preference of the electronic devices. Each of the time and channel synchronized electronic devices 210, 220, 230, and 240 may transmit a beacon and an SDF and receive beacons and SDFs from other electronic devices in the cluster 200 within a discovery window (a discovery period) that is repeated according to a preconfigured cycle. According to an embodiment, the beacon may be periodically transmitted and received for each discovery window so that the time and channel synchronization of the electronic devices 210, 220, 230, and 240 in the cluster 200 is continuously maintained. The SDF may be transmitted and received during the discovery window as needed so that services with the discovered electronic devices 210, 220, 230, and 240 are provided. According to an embodiment, the electronic device operating as the anchor master among the time and channel synchronized electronic devices 210, 220, 230, and 240 may transmit a beacon to detect a new electronic device during the period between the discovery windows.

Each of the electronic devices 210, 220, 230, and 240 in the cluster 200 may operate in an active state only during the discovery window and operate in a low-power state (e.g., sleep state) during the remaining period other than the discovery window, thereby reducing current consumption.

For example, the discovery window is a period of time (e.g., milliseconds) during which an electronic device is active (or awake) and consumes a lot of current, whereas the period other than the discovery window allows low-power discovery because the electronic device remains in a sleep state.

The electronic devices 210, 220, 230, and 240 in the cluster 200 may be simultaneously activated at the start time (e.g., DW start) of the synchronized discovery window and simultaneously switched to a sleep state at the end time (e.g., DW end) of the discovery window.

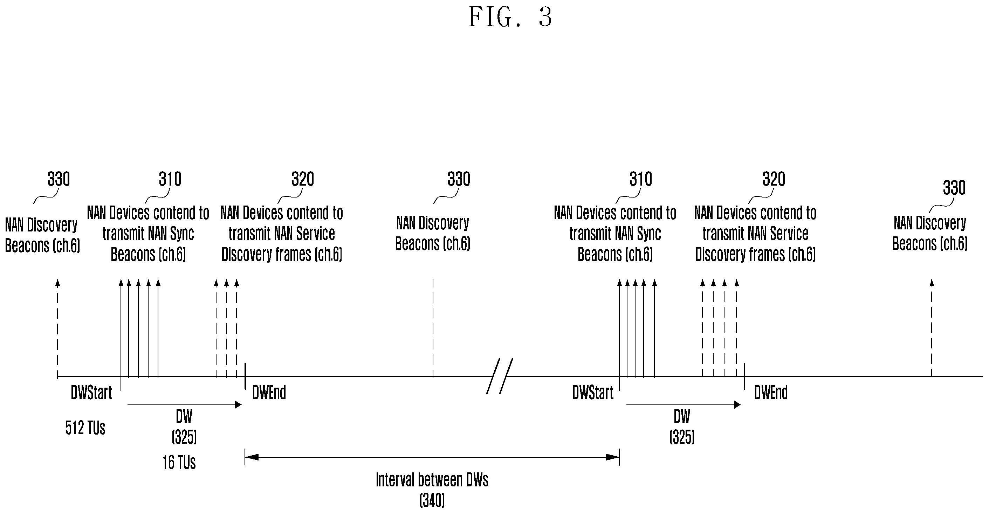

The electronic devices 210, 220, 230, and 240 included in the cluster 200 may perform discovery, synchronization, and data exchange operations, using a protocol illustrated in FIG. 3 described below.

FIG. 3 is a diagram illustrating a protocol for transmitting a signal of an electronic device included in an NAN cluster according to various embodiments of the disclosure.

For example, FIG. 3 may illustrate an example of a discovery window according to various embodiments. In an exemplary illustration of FIG. 3, electronic devices included in a single cluster transmit signals through a specific channel (e.g., channel 6 (Ch6)) based on an NAN standard.

With reference to FIG. 3, the electronic devices included in one cluster may transmit synchronization beacons 310 and SDFs 320 in a synchronized discovery window (DW) 325. In a period 340 other than the discovery window 325 (e.g., an interval between the discovery windows), at least one electronic device may transmit a discovery beacon 330. According to an embodiment, the electronic devices may transmit the synchronization beacons 310 and the SDFs 320, based on contention. For example, the synchronization beacons 310 and the SDFs 320 may be transmitted based on contention among the respective electronic devices belonging to the cluster.

The discovery window 325 may be a period during which the electronic devices are activated from a sleep state, which is a power saving mode, to a wake-up state for data exchange between the electronic devices. For example, the discovery window 325 may be distinguished by a time unit (TU) in milliseconds. According to an embodiment, the discovery window 325 for transmission/reception of the synchronization beacons 310 and the SDFs 320 may occupy 16 time units (16 TUs) and may have a cycle (or interval) that repeats as 512 time units (512 TUs).

The discovery beacon 330 may indicate a signal transmitted so that any other electronic device that has not joined the cluster can discover the cluster. For example, the discovery beacon 330 is a signal for notifying the cluster's presence, and electronic devices that do not participate in the cluster may perform a passive scan to receive the discovery beacon 330 and thereby discover and join the cluster.

The discovery beacon 330 may contain information necessary for synchronization with the cluster. For example, the discovery beacon 330 may include at least one of a frame control (FC) field indicating a function of a signal (e.g., a beacon), a broadcast address, a media access control (MAC) address of a transmitting electronic device, a cluster identifier (ID), a sequence control field, a time stamp for a beacon frame, a beacon interval indicating a transmission interval of the discovery beacon 330, or capability information on an electronic device transmitting the discovery beacon 330.

The discovery beacon 330 may include at least one proximity network (or cluster) related information element. In an embodiment, the proximity network related information may be referred to as attribute information.

The synchronization beacon 310 may indicate a signal for maintaining synchronization between the synchronized electronic devices in the cluster. The synchronization beacon 310 may be transmitted by a synchronization device among the electronic devices in the cluster. For example, the synchronization device may include an anchor master device, a master device, or a non-master sync device, which is defined in the NAN standard.

The synchronization beacon 310 may include information necessary for the electronic devices to synchronize within the cluster. For example, the synchronization beacon 310 may include at least one of an FC field indicating a function of a signal (e.g., a beacon), a broadcast address, a MAC address of a transmitting electronic device, a cluster identifier, a sequence control field, a time stamp for a beacon frame, a beacon interval indicating an interval between start points of the discovery windows 325, or capability information on the transmitting electronic device. According to an embodiment, the synchronization beacon 310 may include at least one proximity network (or cluster) related information element. For example, the proximity network related information may include contents for a service provided via the proximity network.

The SDF 320 may indicate a signal for exchanging data via the proximity network. According to an embodiment, the SDF 320 represents a vendor specific public action frame and may include various fields. For example, the SDF 320 may include a category or action field and may include at least one proximity network related information.

The synchronization beacon 310, the SDF 320, and the discovery beacon 330 may include proximity network related information. In an embodiment, the proximity network related information may include an identifier indicating a type of information, a length of information, and a body field which is corresponding information. In an embodiment, the corresponding information may include at least one of master indication information, cluster information, service identifier list information, service descriptor information, connectivity capability information, wireless LAN infrastructure information, peer-to-peer (P2P) operation information, independent basic service set (IBSS) information, mesh information, additional proximity network service discovery information, further availability map information, country code information, ranging information, cluster discovery information, or vendor specific information.

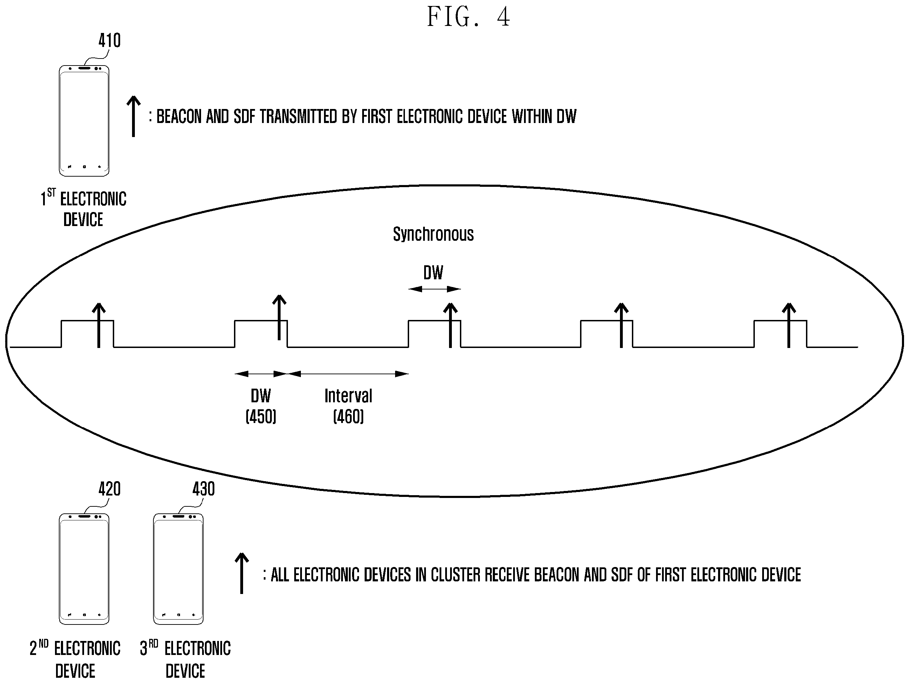

FIG. 4 is a diagram illustrating an example of data transmission and reception within an NAN cluster according to various embodiments of the disclosure.

For example, FIG. 4 illustrates an example in which a first electronic device 410, a second electronic device 420, and a third electronic device 430 form a single cluster through wireless short-range communication technology, and the respective electronic devices 410, 420, and 430 may exchange a beacon and/or an SDF, e.g., transmit and receive a beacon and/or an SDF to and from each other. According to an embodiment, FIG. 4 illustrates an example in which the first electronic device 410 among the electronic devices 410, 420, and 430 constituting the cluster performs the role of a master electronic device.

With reference to FIG. 4, the first electronic device 410 may transmit the beacon and the SDF within a discovery window 450. The first electronic device 410 may broadcast the beacon and the SDF every discovery window 450 that is repeated according to a preconfigured period (e.g., interval 460).

The second electronic device 420 and the third electronic device 430 may receive the beacon and the SDF transmitted by the first electronic device 410. According to an embodiment, each of the second electronic device 420 and the third electronic device 430 may receive the beacon and the SDF broadcast from the first electronic device 410 every discovery window 450.

The beacon transmitted within the discovery window 450 may include a synchronization beacon and may include information for maintaining synchronization among the electronic devices 410, 420 and 430. For example, the second electronic device 420 and/or the third electronic device 430 may perform NAN cluster synchronization, based on time clock information of the first electronic device 410 included in the beacon transmitted by the first electronic device 410 operating as a master. The second electronic device 420 and/or the third electronic device 430 may be synchronized, and thereby the discovery window 450 may be activated at the same time.

In a period (e.g., the interval 460) other than the discovery window 450, the electronic devices 410, 420, and 430 may maintain a sleep state to reduce current consumption. For example, the electronic devices 410, 420, and 430 may reduce current consumption by operating in a wake state only during the discovery window 450, based on a synchronized time clock.

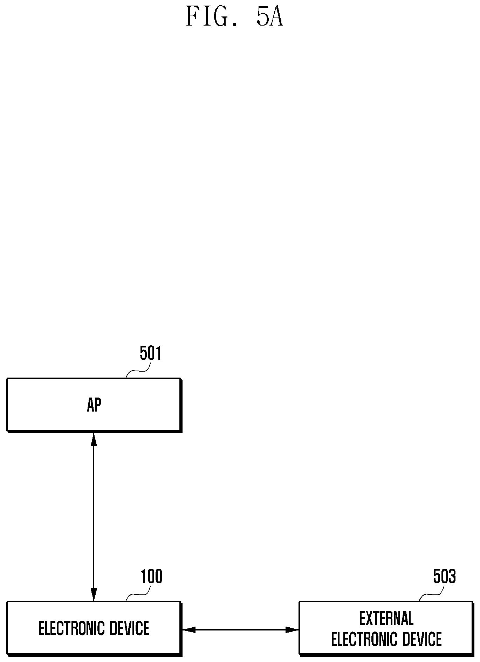

FIG. 5A is a diagram illustrating an electronic device and an external electronic device according to an embodiment.

An electronic device 100 (e.g., the electronic device 100 in FIG. 1, the electronic device 410, 420, or 430 in FIG. 4) and an external electronic device 503 (e.g., the electronic device 100 in FIG. 1, the electronic device 410, 420, or 430 in FIG. 4) may be included in the same NAN cluster (e.g., the NAN cluster 200 in FIG. 2).

The electronic device 100 may be connected to an AP 501 via short-range wireless communication. The AP 501 may be an entity that performs the role of an access point defined in IEEE 802.11. The AP 501 may transmit data, transmitted by the electronic device 100 via short-range wireless communication, to the outside, and may transmit data, received from the outside, to the electronic device 100 via short-range wireless communication.

According to an example, the AP 501 may support a dynamic frequency selection (DFS). The DFS may refer to a technology that enables short-range wireless communication through a DFS channel, which is a channel used for various purposes (e.g., military purposes or weather observation purposes). The DFS channel may have a relatively lower congestion (or channel utilization) than other channels, and the performance of short-range wireless communication via the DFS channel may be higher than the performance of short-range wireless communication via other channels.

According to an example, the AP 501 supporting the DFS may detect (e.g., identify, monitor) a radar signal other than a short-range wireless communication signal. When a radar signal is not detected, the AP 501 may provide short-range wireless communication to the electronic device 100 via the DFS channel. When a radar signal is detected, the AP 501 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to another channel from the AP 501, it may change from the DFS channel to the other channel and perform short-range wireless communication through the other channel.

The external electronic device 503 may be connected to the electronic device 100 through device-to-device communication. The device-to-device communication may refer to communication that allows direct connection between devices without going through an AP. According to an example, the external electronic device 503 may be connected to the electronic device 100 through Wi-Fi direct.

Recently, Wi-Fi direct defines a standard that supports the DFS channel. According to an example, the electronic device 100 and the external electronic device 503 may perform Wi-Fi direct through the DFS channel. If at least one of the electronic device 100 and the external electronic device 503 is connected to a DFS owner that refers to an AP (e.g., the AP 501) capable of detecting a radar signal, and both the electronic device 100 and the external electronic device 503 are capable of receiving a signal transmitted by the DFS owner (e.g., a signal indicating (or requesting) a change in an operating channel according to detection of a radar signal), they may perform Wi-Fi direct through the DFS channel.

According to an example, the electronic device 100 may transmit information related to the DFS channel (e.g., information indicating whether the AP 501 connected to the electronic device 100 supports the DFS, and/or information indicating the DFS channel connected between the electronic device 100 and the AP 501) to the external electronic device 503. The external electronic device 503 may receive the information related to the DFS channel and identify (or scan) whether it can receive a signal being transmitted from the AP 501 included in the information related to the DFS channel through each of a plurality of DFS channels. If the external electronic device 503 discovers (e.g., identifies) a channel capable of receiving the signal transmitted from the AP 501, it may transmit information indicating the discovered channel to the electronic device 100. If the discovered channel is the same as a channel between the electronic device 100 and the AP 501, the electronic device 100 may perform a series of configurations so that Wi-Fi direct can be performed through the DFS channel.

However, due to the time required for the external electronic device 503 to identify whether it can receive the signal being transmitted from the AP 501 included in the information related to the DFS channel through each of the plurality of DFS channels, the time consumed to configure Wi-Fi direct may be very long. Furthermore, there is no discussion yet on a technology for performing NAN communication using the DFS channel.

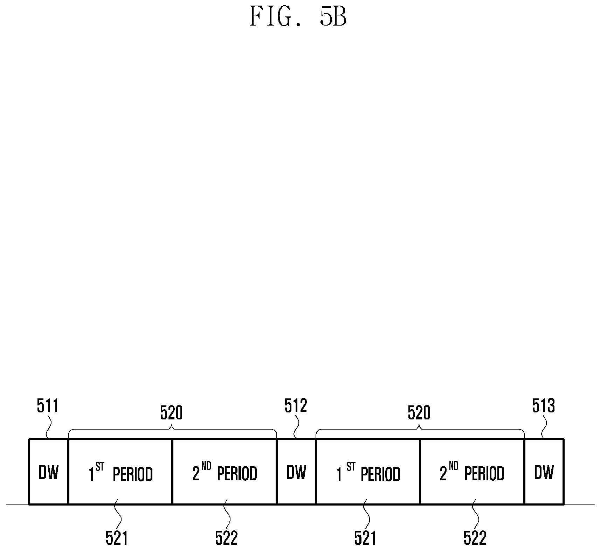

FIG. 5B is a diagram illustrating an example of an electronic device and an external electronic device performing NAN communication and short-range wireless communication according to an embodiment.

An electronic device (e.g., the electronic device 100 in FIG. 5A) and an external electronic device (e.g., the external electronic device 503 in FIG. 5A) may perform NAN communication and/or short-range wireless communication even during a period other than the discovery window 450. According to an example, the electronic device 100 and the external electronic device 503 may fail to complete data transmission and/or reception during the discovery window 450. According to an example, if the size of the data is so large that transmission and/or reception cannot be completed during the discovery window 450, the electronic device 100 and the external electronic device 503 may not complete data transmission and/or reception during the discovery window 450.

The electronic device 100 and the external electronic device 503 may perform an operation for performing NAN communication during a first period 521, which is at least a portion of a period 520 between discovery windows 511, 512, and 513 (e.g., the discovery window 450 in FIG. 4). For example, the electronic device 100 and the external electronic device 503 may be configured to exchange configuration information (e.g., NAN availability attribute or further available window (FAW) attribute) for performing NAN communication during the first period 521, which is at least a portion of the period 520 between the discovery windows 511, 512, and 513, and perform NAN communication during the first period 521 through negotiation. The first period 521 may be referred to as the further available window (FAW), considering that it is an additional period during which NAN communication is possible, other than the discovery windows 511, 512, and 513 defined in the NAN cluster.

The electronic device 100 and the external electronic device 503 may configure a schedule to perform short-range wireless communication during at least a portion (e.g., a second period 522) of the period between the discovery windows 511, 512, and 513, using an AP (e.g., the AP 501).

The electronic device 100 and the external electronic device 503 may perform short-range wireless communication (e.g., Wi-Fi, Wi-Fi direct, and/or Hotspot) during the second period 522 that is another period excluding the first period 521 from the period 520 between the discovery windows 511, 512, and 513. For example, the electronic device 100 and the external electronic device 503 may perform a series of operations for performing short-range wireless communication other than NAN communication during the second period 522 that is at least a portion of the period 520 between the discovery windows 511, 512, and 513. The second period 522 may be at least a portion of the period excluding the discovery windows 511, 512, and 513 and the first period 521 defined in the NAN cluster.

The second period 522 may be referred to as an unaligned window (ULW), considering the characteristic of performing short-range wireless communication rather than NAN communication during a period between the discovery windows 511, 512, and 513.

When the electronic device 100 is connected to the AP 501 through the DFS channel, the NAN communication does not support the DFS channel, and thus the electronic device 100 may fail to perform the NAN communication during the second period 522.

According to an example, in order to perform NAN communication and short-range wireless communication through the DFS channel in the second period 522, the electronic device 100 and the external electronic device 503 should be able to identify whether at least one of the electronic device 100 and the external electronic device 503 is connected to the DFS owner, which refers to the AP capable of detecting the radar signal, and whether both the electronic device 100 and the external electronic device 503 can receive the signal being transmitted from the DFS owner (e.g., the signal that indicates (or requests) a change in the operating channel according to the detection of the radar signal). However, since the NAN communication does not yet support the DFS channel, it is not possible to identify whether at least one of the electronic device 100 and the external electronic device 503 is connected to the DFS owner and whether a signal transmitted from the DFS owner can be received. Therefore, the electronic device 100 and the external electronic device 503 may perform an operation of configuring not to perform NAN communication during the second period 522 in order to perform short-range wireless communication during the second period 522. The electronic device 100 and the external electronic device 503 may exchange configuration information (e.g., unaligned schedule attribute) for performing short-range wireless communication (or configuration information not to perform NAN communication) during the second period 522, which is at least a portion of the period 520 between the discovery windows 521 and 522, and configure not to perform NAN communication during the second period 522 (or to perform short-range wireless communication during the second period 522) through negotiation using the configuration information. The configuration information for performing short-range wireless communication may include at least one of information indicating a frequency band (e.g., 2.4 GHz, 5 GHz, 6 GHz) of short-range wireless communication performed in the second period 522, channel information of short-range wireless communication performed in the second period 522, a starting time of the second period 522 (e.g., a starting time field of the unaligned schedule attribute), a duration of the second period 522 (e.g., a duration field of the unaligned schedule attribute), and a period of the second period 522 (e.g., a period field of the unaligned schedule attribute).

An electronic device willing to perform short-range wireless communication in the second period 522 of the period 520 between the discovery windows 511, 512, and 513 may transmit information configuring not to perform NAN communication in the second period 522 (or information to perform short-range wireless communication in the second period 522) to an electronic device included in the NAN cluster, and be configured to perform short-range wireless communication in the second period 522.

With reference to the schedule illustrated in FIG. 5B, the electronic device 100 and the external electronic device 503 are configured to perform short-range wireless communication during the second period 522, and cannot perform NAN communication during the second period 522. If NAN communication cannot be performed during the second period 522, the quality of a service using NAN communication may deteriorate. According to an example, if the service using NAN communication is a service requiring low latency (e.g., screen mirroring or multi-device service), the inability to perform NAN communication during the second period 522 may lead to a degradation in service quality.

The above-described problem may occur because the external electronic device 503 and the electronic device 100 connected to the AP 501 through the DFS channel cannot identify whether they are connected to the DFS owner and whether a signal being transmitted from the DFS owner can be received, and it is therefore impossible to perform NAN communication during the second period 522.

Hereinafter, examples will be described in which the electronic device 100 can solve the above-described problem by enabling the electronic device 100 and the external electronic device 503 to perform both NAN communication and short-range wireless communication during the second period 522.

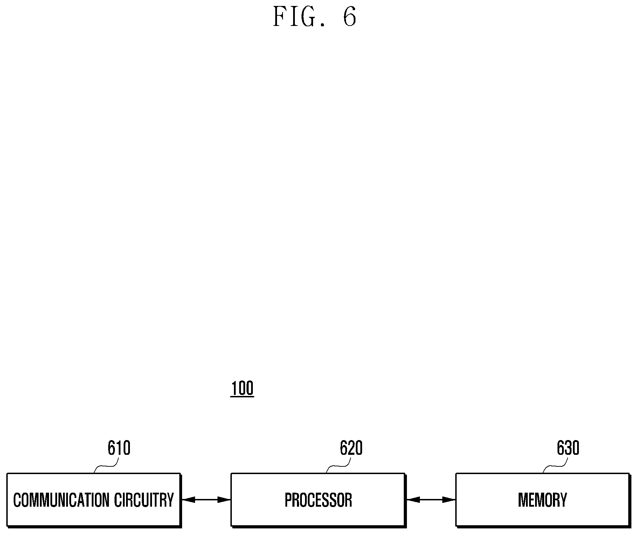

FIG. 6 is a block diagram of an electronic device according to an embodiment.

According to an embodiment, an electronic device (e.g., the electronic device 510 in FIG. 5) may include a communication circuitry 610 (e.g., the wireless communication module 192 in FIG. 1), a processor 620 (e.g., the processor 120 in FIG. 1), and/or a memory 630.

The communication circuitry 610 may be a communication circuitry that supports neighbor awareness network (NAN) communication and peer-to-peer (P2P) communication different from the NAN communication. The P2P communication different from the NAN communication may refer to communication capable of performing direct communication between electronic devices without going through an AP. According to an example, the P2P communication may include Wi-Fi direct.

The communication circuitry 610 may include various circuitry structures used for modulating and/or demodulating signals within the electronic device 510. For example, the communication circuitry 610 may modulate a baseband signal into a radio frequency (RF) band signal to be output through an antenna (not shown), or demodulate an RF band signal received through an antenna into a baseband signal and transmit it to the processor 620.

The processor 620 may perform an operation of receiving data transmitted by an application processor (e.g., the processor 120 in FIG. 1) and generating a packet to transmit the received data. The processor 620 may be defined as a communication processor or an application processor included in a communication module (e.g., the wireless communication module 192 in FIG. 1). The processor 620 may be electrically or operatively connected to the communication circuitry 610 and control the communication circuitry 610.

The memory 630 may store instructions that may be executed by the processor 620. The operation of the processor 620 described below may be performed according to the execution of instructions stored in the memory 630.

The processor 620 may be connected to an AP (e.g., the AP 501 in FIG. 5A) supporting a dynamic frequency selection (DFS) via short-range wireless communication. The DFS may refer to a technology that enables short-range wireless communication via a DFS channel, which is a channel used for various purposes (e.g., military purposes or weather observation purposes). The DFS channel may have relatively lower congestion (or channel utilization) than other channels, and the performance of short-range wireless communication via the DFS channel may be higher than the performance of short-range wireless communication via other channels.

According to an example, the AP 501 supporting the DFS may detect (e.g., identify, monitor) a radar signal other than a short-range wireless communication signal. When a radar signal is not detected, the AP 501 may provide short-range wireless communication to the electronic device 100 via the DFS channel. When a radar signal is detected, the AP 501 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the AP 501, it may change from the DFS channel to other channel and perform short-range wireless communication through the other channel.

The processor 620 may activate NAN communication. According to an example, the processor 620 may activate NAN communication when data transmission and/or reception via NAN communication is required, when a service or application related to data transmission and/or reception via NAN communication is activated, and/or when a user input for performing data transmission and/or reception via NAN communication is received.

The processor 620 may activate NAN communication in a state where short-range wireless communication is activated. Alternatively, the processor 620 may activate short-range wireless communication and NAN communication at substantially the same time.

The processor 620 may discover an electronic device (e.g., the external electronic device 503 in FIG. 5A) capable of performing NAN communication, as a part of an operation of activating NAN communication. The processor 620 may control the communication circuitry 610 to transmit a service discovery frame to the external electronic device 503.

The service discovery frame may include information related to negotiation for activating NAN communication between the electronic device 100 and the external electronic device 503. According to an example, the service discovery frame may include information of the electronic device 100, performance information of the electronic device 100 (e.g., NAN communication related performance information of the electronic device 100), and/or identification information of a service related to NAN communication.

The service discovery frame may include information related to the DFS channel. The information related to the DFS channel may include information indicating whether the AP 501 connected to the electronic device 100 supports the DFS, information related to the AP 501 (e.g., identification information (e.g., SSID, BSSID) of the AP 501), and/or information indicating the DFS channel connected (or established) between the electronic device 100 and the AP 501.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and an external electronic device 503 may perform NAN communication through the DFS channel.

The processor 620 may receive the service discovery frame from the external electronic device 503 in the process of discovering an electronic device (e.g., the external electronic device 503 in FIG. 5A) capable of performing NAN communication.

According to an example, if the external electronic device 503 is not connected to the AP 501 supporting the DFS through short-range wireless communication, the external electronic device 503 may identify (or scan) whether it can receive a signal being transmitted from the AP 501 included in information related to the DFS channel through each of a plurality of DFS channels, and transmit the service discovery frame including the identifying result (e.g., discovering a channel capable of receiving a signal transmitted from the AP 501) to the electronic device 100. The processor 620 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the AP 501 included in the information related to the DFS channel through each of the plurality of DFS channels may take up a large proportion of the time taken to establish NAN communication. As the time taken to identify whether the signal being transmitted from the AP 501 included in the information related to the DFS channel can be received through each of the plurality of DFS channels increases, the time taken to establish NAN communication may increase, and the delay time related to activating the service through NAN communication may increase.

In order to resolve the phenomenon described above, the processor 620 may establish an NDP with the external electronic device 503 through a channel different from the DFS channel if the service discovery frame received from the external electronic device 503 does not include the information related to the DFS channel. The processor 620 may generate (or configure) schedule information related to performing NAN communication as at least a part of the operation of establishing the NDP with the external electronic device 503.

The schedule information may refer to information that allows the electronic device 100 and the external electronic device 503 to perform NAN communication through a channel different from the DFS channel during at least a portion of a period (e.g., the interval 460) between discovery windows (e.g., the discovery windows 450 in FIG. 4). According to an example, the processor 620 may generate (or configure) the schedule information to perform NAN communication during the first period 521 of the interval 460 between the discovery windows 450. The first period 521 may be referred to as a further available window (FAW), considering that it is an additional period during which NAN communication is possible, other than the discovery windows 511, 512, and 513 defined in the NAN cluster.

According to an example, the schedule information may refer to information that allows the electronic device 100 and the external electronic device 503 to perform short-range wireless communication during a period (e.g., the second period 522) other than the first period 521 within the interval 460 between the discovery windows 450.

It may refer to information that allows the electronic device 100 and the external electronic device 503 to perform NAN communication through a channel different from the DFS channel during at least a portion of the interval. The second period 522 may be referred to as an unaligned window (ULW), considering the characteristic of performing short-range wireless communication, other than NAN communication, between the discovery windows 450.

The processor 620 may establish the NDP through a channel different from the DFS channel and perform NAN communication with the external electronic device 503 based on the schedule information related to performing NAN communication. The processor 620 may control the communication circuitry 610 to perform NAN communication with the external electronic device 503 during the first period 521 within the interval between the discovery windows 450, and control the communication circuitry 610 to perform short-range wireless communication with the AP 501 during the second period 522 within the interval between the discovery windows 450.

After establishing the NDP (or while performing the NAN communication), the processor 620 may receive, from the external electronic device 530, information indicating that the signal transmitted by the AP can be received through the DFS channel.

According to an example, after establishing the NDP (e.g., while performing the NAN communication), the external electronic device 530 may identify (e.g., scan) whether it can receive the signal being transmitted from the AP 501, based on the information related to the DFS channel transmitted by the electronic device 100. If determining that the signal transmitted by the AP 501 can be received through the DFS channel, the external electronic device 503 may transmit, to the electronic device 100, a signal (or message, frame) indicating that the signal transmitted by the AP 501 can be received through the DFS channel.

According to an example, after establishing the NDP (e.g., while performing the NAN communication), the processor 620 may control the communication circuitry 610 to transmit, to the external electronic device 503, a request signal (e.g., a message, or a frame) to request identifying whether the external electronic device 503 can receive a signal from the AP 501 through the DFS channel. Upon receiving the request signal, the external electronic device 503 may identify (e.g., scan) whether the signal transmitted by the AP 501 can be received, based on information related to the DFS channel included in the request signal or the service discovery frame. The external electronic device 503 may transmit, to the electronic device 100, a response signal indicating that the signal transmitted by the AP 501 can be received through the DFS channel.

According to an example, after establishing the NDP (e.g., while performing the NAN communication), the processor 620 may not transmit, to the external electronic device 503, the request signal (e.g., a message, or a frame) to request identifying whether the external electronic device 503 can receive a signal from the AP 501 through the DFS channel. If the information related to the DFS channel is included in the service discovery frame received from the electronic device 100 before the establishment of the NDP, the external electronic device 503 may identify (e.g., scan) whether it can receive a signal being transmitted from the AP 501, based on the information related to the DFS channel included in the service discovery frame, after establishing the NDP (e.g., while performing the NAN communication).

The processor 620 may transmit the DFS channel related information including information indicating the DFS channel between the electronic device 100 and the AP 501 to the external electronic device 503. Instead of performing scanning for a plurality of DFS channels, the external electronic device 503 may identify whether it can receive a signal being transmitted from the AP 501 through the DFS channel included in the DFS channel related information. The request signal may prevent the external electronic device 503 from performing an operation of identifying whether it can receive a signal being transmitted from the AP 501 through a DFS channel different from the DFS channel included in the request signal. Therefore, the electronic device 100 may significantly reduce the time required for configuring the NDP through the DFS channel.

After establishing the NDP (e.g., while performing the NAN communication), if the processor 620 receives, from the external electronic device 530, information indicating that the signal transmitted by the AP can be received through the DFS channel, the processor 620 may change (e.g., update) the determined (e.g., configured) schedule information. The processor 620 may change (e.g., update) the schedule information so that the NAN communication and/or the short-range wireless communication can be performed through the DFS channel.

According to an example, the processor 620 may change (e.g., update) the schedule information so that the electronic device 100 and the external electronic device 503 can perform the NAN communication during the first period 521 between the discovery windows 450 and perform both the NAN communication and the short-range wireless communication through the DFS channel during the second period 522 between the discovery windows 450.

According to an example, the processor 620 may change (e.g., update) the schedule information, which is configured to suppress (e.g., refrain from) performing the NAN communication during the second period 522 between the discovery windows 450, to enable the NAN communication and the short-range wireless communication to be performed through the DFS channel during the second period 522.

The processor 620 may control the communication circuitry 610 to perform the NAN communication and/or the short-range wireless communication based on the changed schedule information.

The processor 620 may control the communication circuitry 610 to transmit the service discovery frame (e.g., schedule request frame) including the changed schedule information to the external electronic device 503. The external electronic device 503 may receive the changed schedule information and perform the NAN communication and/or the short-range wireless communication based on the changed schedule information.

With reference to the example described above, the electronic device 100 may configure the NDP through a channel different from the DFS channel (e.g., a channel that does not support the DFS) before identifying whether the external electronic device 503 can receive the signal being transmitted from the AP 501 through the DFS channel. After configuring the NDP, the electronic device 100 may change (or update) the schedule information to enable the NAN communication and/or the short-range wireless communication to be performed through the DFS channel. Therefore, the electronic device 100 can significantly reduce the time required to activate a service using the NAN communication by reducing the delay time caused by the scanning operation of the external electronic device 503 through the plurality of DFS channels.

The processor 620 may change (e.g., update) the schedule information so that the electronic device 100 and the external electronic device 503 may perform the short-range wireless communication and the NAN communication during the interval between the discovery windows 450 through the DFS channel. By changing (e.g., updating) the schedule information to perform the NAN communication during the first period 521 through the DFS channel, the processor 620 may enable the electronic device 100 and the external electronic device 503 to perform the short-range wireless communication and/or the NAN communication during the entire interval (e.g., the first period 521 and the second period 522) between the discovery windows 450.

After establishing the NDP (e.g., while performing the NAN communication), if the processor 620 fails to receive, from the external electronic device 530, the information indicating that the signal transmitted by the AP can be received through the DFS channel, the processor 620 may maintain (e.g., may not update) the schedule information. Maintaining the schedule information may refer to controlling the communication circuitry 610 to allow the electronic device 100 to perform the NAN communication with the external electronic device 503 during the first period 521 within the interval between the discovery windows 450 as well as the discovery windows 450, and controlling the communication circuitry 610 to allow the electronic device 100 to perform the short-range wireless communication with the AP 501 during the second period 522 within the interval between the discovery windows 450.

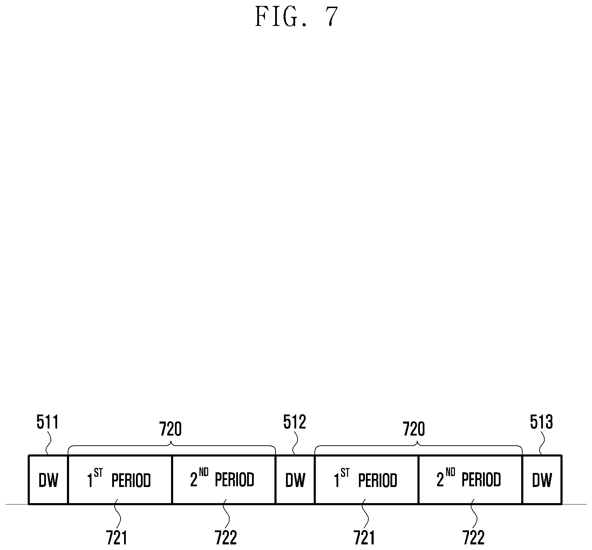

FIG. 7 is a diagram illustrating schedule information for an electronic device performing NAN communication and short-range wireless communication, according to an embodiment.

The schedule information illustrated in FIG. 7 may be schedule information updated based on the electronic device 100 receiving, from an external electronic device (e.g., the external electronic device 503 in FIG. 5A), information indicating that the external electronic device 503 can receive a signal being transmitted from an AP (e.g., the AP 501 in FIG. 5A) through a DFS channel, after configuring (or establishing) an NDP (or while performing NAN communication).

According to an example, the electronic device 100 may change (e.g., update) schedule information so that the electronic device 100 and the external electronic device 503 may perform NAN communication during a first period 721 within a period 720 between discovery windows 511, 512, and 513, and perform both NAN communication and short-range wireless communication through a DFS channel during a second period 722 within the period 720 between the discovery windows 511, 512, and 513.

According to an example, the electronic device 100 may change (e.g., update) the schedule information, which is configured to suppress (e.g., refrain from) performing the NAN communication during the second period 722 between the discovery windows 511, 512, and 513, to enable both the NAN communication and the short-range wireless communication to be performed through the DFS channel during the second period 722.

The electronic device 100 may control the communication circuitry 610 to perform the NAN communication and/or the short-range wireless communication based on the changed schedule information.

The electronic device 100 may control the communication circuitry 610 to transmit a service discovery frame (e.g., schedule request frame) including the changed schedule information to the external electronic device 503. The external electronic device 503 may receive the changed schedule information and perform the NAN communication and/or the short-range wireless communication based on the changed schedule information.

With reference to the example described above, the electronic device 100 may configure the NDP through a channel different from the DFS channel (e.g., a channel that does not support the DFS) before identifying whether the external electronic device 503 can receive the signal being transmitted from the AP 501 through the DFS channel. After configuring the NDP, the electronic device 100 may change (e.g., update) the schedule information to enable the NAN communication and/or the short-range wireless communication to be performed through the DFS channel. Therefore, the electronic device 100 can significantly reduce the time required to activate a service using the NAN communication by reducing the delay time caused by the scanning operation of the external electronic device 503 through the plurality of DFS channels.

The electronic device 100 may generate schedule information illustrated in FIG. 7 and transmit a service discovery frame including the schedule information to the external electronic device 503. The schedule information may be included in an NAN availability attribute, and the NAN availability attribute may include a start time of the first period 721, a duration and/or a periodicity of the first period 721, a start time of the second period 722, and a duration and/or a periodicity of the second period 722.

The first period 721 may correspond to one further available window (FAW), and the second period 722 may correspond to a FAW different from the FAW corresponding to the first period 721.

The electronic device 100 may configure the periodicity of the first period 721 and the second period 722 to be substantially the same as the periodicity of the discovery windows 511, 512, and 513, but there is no limitation.

The electronic device 100 may configure the duration of the first period 721 and the second period 722 to be the same, but there is no limitation.

According to an example, the electronic device 100 may configure the duration of the first period 721 and the second period 722 to be different based on the throughput of short-range wireless communication and the throughput of NAN communication. For example, if the throughput of the short-range wireless communication is smaller than the throughput of the NAN communication, the electronic device 100 may configure the duration of the first period 721 to be longer than the duration of the second period 722. For example, if the throughput of the short-range wireless communication is greater than the throughput of the NAN communication, the electronic device 100 may configure the duration of the first period 721 to be shorter than the duration of the second period 722.

According to an example, the electronic device 100 may configure the duration of the first period 721 and the second period 722 based on the characteristics of a service using the short-range wireless communication and the characteristics of a service using the NAN communication. For example, if the service using the NAN communication is a service that requires high throughput, the electronic device 100 may configure the duration of the first period 721 to be longer than the duration of the second period 722.

The electronic device 100 may change (e.g., update) the schedule information so that the electronic device 100 and the external electronic device 503 may perform the short-range wireless communication and the NAN communication during the period between the discovery windows 511, 512, and 513 through the DFS channel. By changing (e.g., updating) the schedule information to perform the NAN communication during the first period 721 through the DFS channel, the electronic device 100 may enable the electronic device 100 and the external electronic device 503 to perform the short-range wireless communication and/or the NAN communication during the entire period (e.g., the first period 721 and the second period 722) between the discovery windows 511, 512, and 513.

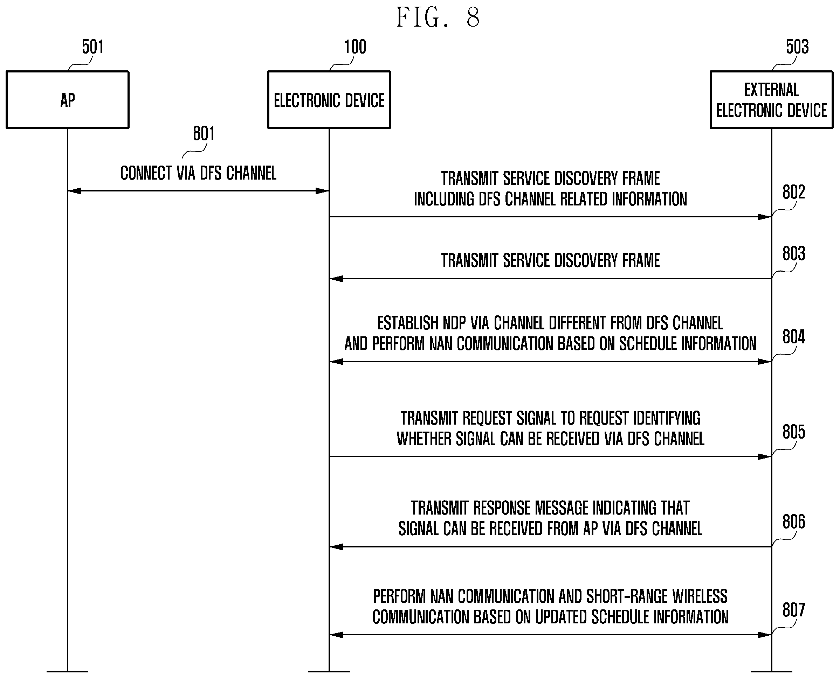

FIG. 8 is a diagram illustrating an example in which an electronic device updates schedule information based on information related to a DFS channel received from an external electronic device, according to an embodiment.

In operation 801, an electronic device (e.g., the electronic device 100 in FIG. 6) and an AP (e.g., the AP 501 in FIG. 5A) may be connected through a DFS channel.

The electronic device 100 may be connected through short-range wireless communication with the AP (e.g., the AP 501 in FIG. 5A) that supports dynamic frequency selection (DFS). The DFS may refer to a technology that enables short-range wireless communication through a DFS channel, which is a channel used for various purposes (e.g., military purposes or weather observation purposes). The DFS channel may have a relatively low congestion (or channel utilization) than other channels, and the performance of short-range wireless communication via the DFS channel may be higher than the performance of short-range wireless communication via other channels.

According to an example, the AP 501 supporting the DFS may detect (e.g., identify, monitor) a radar signal other than a short-range wireless communication signal. When a radar signal is not detected, the AP 501 may provide short-range wireless communication to the electronic device 100 via the DFS channel. When a radar signal is detected, the AP 501 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the AP 501, it may change from the DFS channel to other channel and perform short-range wireless communication through the other channel.

In operation 802, the electronic device 100 may transmit a service discovery frame including information related to the DFS channel to an external electronic device (e.g., the external electronic device 503 in FIG. 5A).

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate short-range wireless communication and NAN communication at substantially the same time.

The electronic device 100 may discover an electronic device (e.g., the external electronic device 503 in FIG. 5A) capable of performing NAN communication, as a part of an operation of activating NAN communication. The electronic device 100 may control the communication circuitry 610 to transmit a service discovery frame to the first external electronic device 503.

The service discovery frame may include information related to negotiation for activating NAN communication between the electronic device 100 and the external electronic device 503. According to an example, the service discovery frame may include information of the electronic device 100, performance information of the electronic device 100 (e.g., NAN communication related performance information of the electronic device 100), and/or identification information of a service related to NAN communication.

The service discovery frame may include information related to the DFS channel. The information related to the DFS channel may include information indicating whether the AP 501 connected to the electronic device 100 supports the DFS, information related to the AP 501 (e.g., identification information (e.g., SSID, BSSID) of the AP 501), and/or information indicating the DFS channel connected (e.g., established) between the electronic device 100 and the AP 501.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and an external electronic device 503 may perform NAN communication through the DFS channel.

In operation 803, the external electronic device 503 may transmit the service discovery frame to the electronic device 100.

The electronic device 100 may receive the service discovery frame from the external electronic device 503 in the process of discovering an electronic device (e.g., the external electronic device 503 in FIG. 5A) capable of performing NAN communication.

According to an example, if the external electronic device 503 is not connected to the AP 501 supporting the DFS through short-range wireless communication, the external electronic device 503 may identify (e.g., scan) whether it can receive a signal being transmitted from the AP 501 included in information related to the DFS channel through each of a plurality of DFS channels, and transmit the service discovery frame including the identifying result (e.g., discovering a channel capable of receiving a signal transmitted from the AP 501) to the electronic device 100. The electronic device 100 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the AP 501 included in the information related to the DFS channel through each of the plurality of DFS channels may take up a large proportion of the time taken to establish NAN communication. As the time taken to identify whether the signal being transmitted from the AP 501 included in the information related to the DFS channel can be received through each of the plurality of DFS channels increases, the time taken to establish NAN communication may increase, and the delay time related to activating the service through NAN communication may increase.

In operation 804, the electronic device 100 and the external electronic device 503 may establish an NDP through a channel different from the DFS channel, and perform NAN communication based on schedule information.

In order to resolve the phenomenon described above, the electronic device 100 may establish the NDP with the external electronic device 503 through a channel different from the DFS channel if the service discovery frame received from the external electronic device 503 does not include the information related to the DFS channel. The electronic device 100 may generate (e.g., configure) schedule information related to performing NAN communication as at least a part of the operation of establishing the NDP with the external electronic device 503.

The schedule information may refer to information that allows the electronic device 100 and the external electronic device 503 to perform NAN communication through a channel different from the DFS channel during at least a portion of the period 720 between discovery windows 511, 512, and 513. According to an example, the electronic device 100 may generate (e.g., configure) the schedule information to perform NAN communication during the first period 721 within the period 720 between the discovery windows 511, 512, and 513. The first period 721 may be referred to as a further available window (FAW), considering that it is an additional period during which NAN communication is possible, other than the discovery windows 511, 512, and 513 defined in the NAN cluster.

According to an example, the schedule information may refer to information that allows the electronic device 100 and the external electronic device 503 to perform short-range wireless communication during a period (e.g., the second period 722) other than the first period 721 within the period 720 between the discovery windows 511, 512, and 513.

It may refer to information that allows the electronic device 100 and the external electronic device 503 to perform NAN communication through a channel different from the DFS channel during at least a portion of the interval. The second period 722 may be referred to as an unaligned window (ULW), considering the characteristic of performing short-range wireless communication, other than NAN communication, between the discovery windows 450.

The electronic device 100 may establish the NDP through a channel different from the DFS channel and perform NAN communication with the external electronic device 503 based on the schedule information related to performing NAN communication. The electronic device 100 may control the communication circuitry 610 to perform NAN communication with the external electronic device 503 during the first period 721 within the period 720 between the discovery windows 511, 512, and 513, and control the communication circuitry 610 to perform short-range wireless communication with the AP 501 during the second period 722 within the period 720 between the discovery windows 511, 512, and 513.

In operation 805, the electronic device 100 may transmit, to the external electronic device 503, a request signal to request identifying whether a signal can be received through the DFS channel.

According to an example, after establishing the NDP (e.g., while performing the NAN communication), the electronic device 100 may control the communication circuitry 610 to transmit, to the external electronic device 503, a request signal (e.g., a message, or frame) to request identifying whether the external electronic device 503 can receive a signal from the AP 501 through the DFS channel. Upon receiving the request signal, the external electronic device 503 may identify (e.g., scan) whether the signal transmitted by the AP 501 can be received, based on information related to the DFS channel included in the request signal or the service discovery frame. The external electronic device 503 may transmit, to the electronic device 100, a response signal indicating that the signal transmitted by the AP 501 can be received through the DFS channel.

The electronic device 100 may transmit the DFS channel related information including information indicating the DFS channel between the electronic device 100 and the AP 501 to the external electronic device 503. Instead of performing scanning for a plurality of DFS channels, the external electronic device 503 may identify whether it can receive a signal being transmitted from the AP 501 through the DFS channel included in the DFS channel related information. The request signal may prevent the external electronic device 503 from performing an operation of identifying whether it can receive a signal being transmitted from the AP 501 through a DFS channel different from the DFS channel included in the request signal. Therefore, the electronic device 100 may significantly reduce the time required for configuring the NDP through the DFS channel.

According to an example, after establishing the NDP (e.g., while performing the NAN communication), the electronic device 100 may not transmit, to the external electronic device 503, the request signal (e.g., a message, or frame) to request identifying whether the external electronic device 503 can receive a signal from the AP 501 through the DFS channel. That is, operation 805 may be omitted. If the DFS channel related information is included in the service discovery frame received from the electronic device 100 before the establishment of the NDP, the external electronic device 503 may identify (e.g., scan) whether it can receive a signal being transmitted from the AP 501, based on the DFS channel related information included in the service discovery frame, after establishing the NDP (e.g., while performing the NAN communication).

In operation 806, the external electronic device 503 may transmit, to the electronic device 100, a response message indicating that a signal can be received from the AP 501 through the DFS channel.

In operation 807, the electronic device 100 and the external electronic device 503 may perform both NAN communication and short-range wireless communication based on the updated schedule information.

After establishing the NDP (e.g., while performing the NAN communication), if the electronic device 100 receives, from the external electronic device 530, information indicating that the signal transmitted by the AP can be received through the DFS channel, the electronic device 100 may change (or update) the determined (e.g., configured) schedule information. The electronic device 100 may change (e.g., update) the schedule information so that the NAN communication and/or the short-range wireless communication can be performed through the DFS channel.

According to an example, the electronic device 100 may change (e.g., update) the schedule information so that the electronic device 100 and the external electronic device 503 can perform the NAN communication during the first period 721 between the discovery windows 511, 512, and 513 and perform both the NAN communication and the short-range wireless communication through the DFS channel during the second period 722 between the discovery windows 511, 512, and 513.

According to an example, the electronic device 100 may change (e.g., update) the schedule information, which is configured to suppress (e.g., refrain from) performing the NAN communication during the second period 722 between the discovery windows 511, 512, and 513, to enable the NAN communication and the short-range wireless communication to be performed through the DFS channel during the second period 722.

The electronic device 100 may control the communication circuitry 610 to perform the NAN communication and/or the short-range wireless communication based on the changed schedule information.

The electronic device 100 may control the communication circuitry 610 to transmit the service discovery frame (e.g., schedule request frame) including the changed schedule information to the external electronic device 503. The external electronic device 503 may receive the changed schedule information and perform the NAN communication and/or the short-range wireless communication based on the changed schedule information.

With reference to the example described above, the electronic device 100 may configure the NDP through a channel different from the DFS channel (e.g., a channel that does not support the DFS) before identifying whether the external electronic device 503 can receive the signal being transmitted from the AP 501 through the DFS channel. After configuring the NDP, the electronic device 100 may change (e.g., update) the schedule information to enable the NAN communication and/or the short-range wireless communication to be performed through the DFS channel. Therefore, the electronic device 100 can significantly reduce the time required to activate a service using the NAN communication by reducing the delay time caused by the scanning operation of the external electronic device 503 through the plurality of DFS channels.

The electronic device 100 may change (e.g., update) the schedule information so that the electronic device 100 and the external electronic device 503 may perform the short-range wireless communication and the NAN communication during the period 720 between the discovery windows 511, 512, and 513 through the DFS channel. By changing (e.g., updating) the schedule information to perform the NAN communication during the first period 721 through the DFS channel, the electronic device 100 may enable the electronic device 100 and the external electronic device 503 to perform the short-range wireless communication and/or the NAN communication during the entire period (e.g., the first period 721 and the second period 722) between the discovery windows 511, 512, and 513.

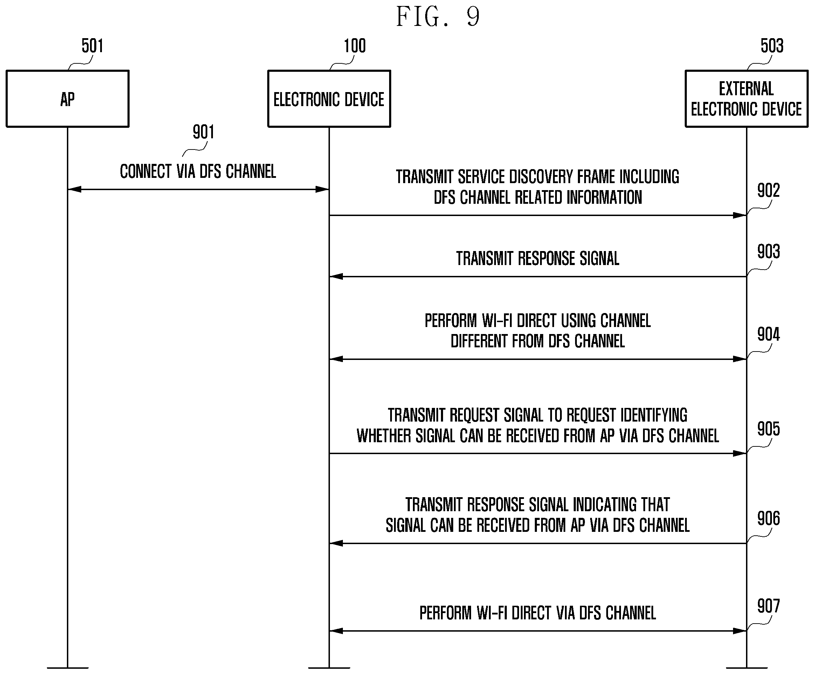

FIG. 9 is a diagram illustrating an example in which an electronic device changes an operating channel based on information related to a DFS channel received from an external electronic device, according to an embodiment.

According to an embodiment, the above-described examples may also be applied when an electronic device (e.g., the electronic device 100 in FIG. 6) and an external electronic device (e.g., the external electronic device 503 in FIG. 5A) perform not only NAN communication but also Wi-Fi direct.

In operation 901, the electronic device 100 and an AP (e.g., the AP 501 in FIG. 5A) may be connected through a DFS channel.

The electronic device 100 may be connected through short-range wireless communication with the AP (e.g., the AP 501 in FIG. 5A) that supports dynamic frequency selection (DFS). The DFS may refer to a technology that enables short-range wireless communication through a DFS channel, which is a channel used for various purposes (e.g., military purposes or weather observation purposes). The DFS channel may have a relatively low congestion (or channel utilization) than other channels, and the performance of short-range wireless communication via the DFS channel may be higher than the performance of short-range wireless communication via other channels.

According to an example, the AP 501 supporting the DFS may detect (e.g., identify, monitor) a radar signal other than a short-range wireless communication signal. When a radar signal is not detected, the AP 501 may provide short-range wireless communication to the electronic device 100 via the DFS channel. When a radar signal is detected, the AP 501 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the AP 501, it may change from the DFS channel to other channel and perform short-range wireless communication through the other channel.

In operation 902, the electronic device 100 may transmit a discovery signal including information related to the DFS channel to an external electronic device (e.g., the external electronic device 503 in FIG. 5A).

The electronic device 100 may activate Wi-Fi direct. According to an example, the electronic device 100 may activate Wi-Fi direct when data transmission and/or reception via Wi-Fi direct is required, when a service or application related to data transmission and/or reception via Wi-Fi direct is activated, and/or when a user input for performing data transmission and/or reception via Wi-Fi direct is received.

The electronic device 100 may activate Wi-Fi direct in a state where short-range wireless communication is activated. Alternatively, the electronic device 100 may activate short-range wireless communication and Wi-Fi direct at substantially the same time.

The electronic device 100 may discover an electronic device (e.g., the external electronic device 503 in FIG. 5A) capable of performing NAN communication, as a part of an operation of activating Wi-Fi direct. The electronic device 100 may control the communication circuitry 610 to transmit a discovery signal to the first external electronic device 503.

According to an example, the discovery signal may be transmitted via short-range wireless communication, or may be transmitted via any other short-range wireless communication (e.g., Bluetooth).

The discovery signal may include information related to the DFS channel. The information related to the DFS channel may include information indicating whether the AP 501 connected to the electronic device 100 supports the DFS, information related to the AP 501 (e.g., identification information (e.g., SSID, BSSID) of the AP 501), and/or information indicating the DFS channel connected (or established) between the electronic device 100 and the AP 501.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and an external electronic device 503 may perform NAN communication through the DFS channel.

In operation 903, the external electronic device 503 may transmit a response signal to the electronic device 100.

The electronic device 100 may receive the response signal corresponding to the discovery signal from the external electronic device 503 in the process of discovering an electronic device (e.g., the external electronic device 503 in FIG. 5A) capable of performing Wi-Fi direct.

According to an example, if the external electronic device 503 is not connected to the AP 501 supporting the DFS through short-range wireless communication, the external electronic device 503 may identify (e.g., scan) whether it can receive a signal being transmitted from the AP 501 included in information related to the DFS channel through each of a plurality of DFS channels, and transmit the response signal including the identifying result (e.g., discovering a channel capable of receiving a signal transmitted from the AP 501) to the electronic device 100. The electronic device 100 may identify the information related to the DFS channel included in the response signal, and determine whether the external electronic device 503 can perform NAN communication through the DFS channel.

However, the time taken for the external electronic device 503 to identify whether it can receive the signal being transmitted from the AP 501 included in the information related to the DFS channel through each of the plurality of DFS channels may take up a large proportion of the time taken to establish a channel using Wi-Fi direct. As the time taken to identify whether the signal being transmitted from the AP 501 included in the information related to the DFS channel can be received through each of the plurality of DFS channels increases, the time taken to establish the channel using Wi-Fi direct may increase, and the delay time related to activating the service using Wi-Fi direct may increase.

In operation 904, the electronic device 100 and the external electronic device 503 may configure and perform Wi-Fi direct using a channel different from the DFS channel.

In operation 905, the electronic device 100 may transmit, to the external electronic device 503, a request signal to request identifying whether a signal can be received through the DFS channel.

According to an example, while performing Wi-Fi direct, the electronic device 100 may control the communication circuitry 610 to transmit, to the external electronic device 503, a request signal (e.g., a message, or frame) to request identifying whether the external electronic device 503 can receive a signal from the AP 501 through the DFS channel. Upon receiving the request signal, the external electronic device 503 may identify (e.g., scan) whether the signal transmitted by the AP 501 can be received, based on information related to the DFS channel included in the request signal or the service discovery frame.

The electronic device 100 may transmit the DFS channel related information including information indicating the DFS channel between the electronic device 100 and the AP 501 to the external electronic device 503. Instead of performing scanning for a plurality of DFS channels, the external electronic device 503 may identify whether it can receive a signal being transmitted from the AP 501 through the DFS channel included in the DFS channel related information. The request signal may prevent the external electronic device 503 from performing an operation of identifying whether it can receive a signal being transmitted from the AP 501 through a DFS channel different from the DFS channel included in the request signal. Therefore, the electronic device 100 may significantly reduce the time required for configuring the NDP through the DFS channel.

According to an example, while performing Wi-Fi direct through a channel different from the DFS channel, the electronic device 100 may not transmit, to the external electronic device 503, the request signal (e.g., a message, or frame) to request identifying whether the external electronic device 503 can receive a signal from the AP 501 through the DFS channel. That is, operation 905 may be omitted. If the DFS channel related information is included in the discovery signal received in operation 902, the external electronic device 503 may identify (e.g., scan) whether it can receive a signal being transmitted from the AP 501, based on the DFS channel related information included in the discovery signal, while performing Wi-Fi direct through a channel different from the DFS channel.

In operation 906, the external electronic device 503 may transmit, to the electronic device 100, a response message indicating that a signal can be received from the AP 501 through the DFS channel.

In operation 907, the electronic device 100 and the external electronic device 503 may perform Wi-Fi direct using the DFS channel.

If the electronic device 100 receives the response message indicating that the external electronic device 503 can receive the signal from the AP 501 through the DFS channel, the electronic device 100 may change the operating channel of Wi-Fi direct to the DFS channel.

With reference to the example described above, the electronic device 100 can significantly reduce the time required to activate Wi-Fi direct, by activating the Wi-Fi direct through a channel different from the DFS channel before identifying whether the external electronic device 503 can receive a signal from the AP 501 through each of the plurality of DFS channels. Additionally, in the case of identifying that the external electronic device 503 can receive a signal from the AP 501 through the DFS channel, the electronic device 100 may change the operating channel of Wi-Fi direct to the DFS channel, thereby utilizing a channel with a relatively low congestion and improving the data transmission speed and/or reception speed using Wi-Fi direct.

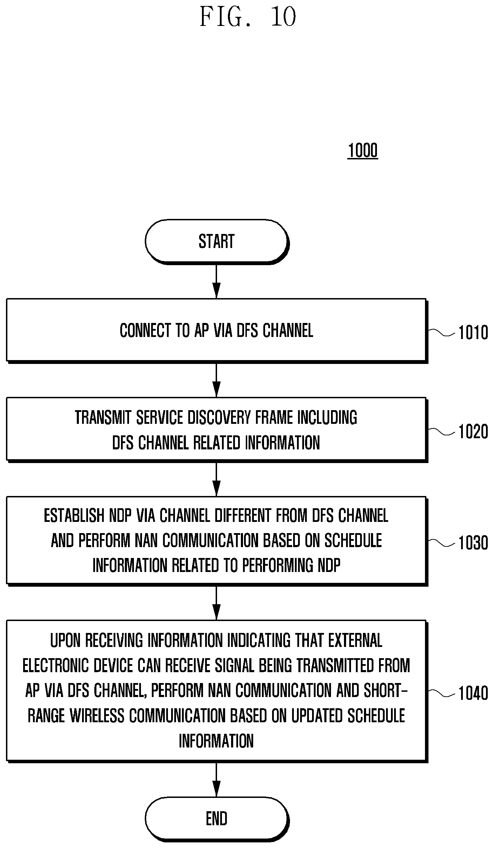

FIG. 10 is a flowchart illustrating an operating method of an electronic device according to an embodiment.

In operation 1010, an electronic device (e.g., the electronic device 100 in FIG. 6) may be connected to an AP (e.g., the AP 501 in FIG. 5A) through a DFS channel.

The electronic device 100 may be connected to the AP (e.g., the AP 501 in FIG. 5A) supporting dynamic frequency selection (DFS) through short-range wireless communication. The DFS may refer to a technology that enables short-range wireless communication through a DFS channel, which is a channel used for various purposes (e.g., military purposes or weather observation purposes). The DFS channel may have a relatively low congestion (or channel utilization) than other channels, and the performance of short-range wireless communication via the DFS channel may be higher than the performance of short-range wireless communication via other channels.

According to an example, the AP 501 supporting the DFS may detect (e.g., identify, monitor) a radar signal other than a short-range wireless communication signal. When a radar signal is not detected, the AP 501 may provide short-range wireless communication to the electronic device 100 via the DFS channel. When a radar signal is detected, the AP 501 may control the electronic device 100 to perform short-range wireless communication by changing to a channel different from the DFS channel. A signal requesting a change from the DFS channel to any other channel may be included in a clear to send (CTS) frame. The electronic device 100 may perform short-range wireless communication via the DFS channel, and upon receiving a signal requesting a change from the DFS channel to other channel from the AP 501, it may change from the DFS channel to other channel and perform short-range wireless communication through the other channel.

The electronic device 100 may activate NAN communication. According to an example, the electronic device 100 may activate NAN communication when data transmission and/or reception via NAN communication is required, when a service or application related to data transmission and/or reception via NAN communication is activated, and/or when a user input for performing data transmission and/or reception via NAN communication is received.

The electronic device 100 may activate NAN communication in a state where short-range wireless communication is activated. Alternatively, the electronic device 100 may activate short-range wireless communication and NAN communication at substantially the same time.

In operation 1020, the electronic device 100 may transmit a service discovery frame including information related to the DFS channel to an external electronic device (e.g., the external electronic device 503 in FIG. 5A).

The electronic device 100 may discover an electronic device (e.g., the external electronic device 503 in FIG. 5A) capable of performing NAN communication, as a part of an operation of activating NAN communication. The electronic device 100 may control the communication circuitry 610 to transmit a service discovery frame to the first external electronic device 503.

The service discovery frame may include information related to negotiation for activating NAN communication between the electronic device 100 and the external electronic device 503. According to an example, the service discovery frame may include information of the electronic device 100, performance information of the electronic device 100 (e.g., NAN communication related performance information of the electronic device 100), and/or identification information of a service related to NAN communication.

The service discovery frame may include information related to the DFS channel. The information related to the DFS channel may include information indicating whether the AP 501 connected to the electronic device 100 supports the DFS, information related to the AP 501 (e.g., identification information (e.g., SSID, BSSID) of the AP 501), and/or information indicating the DFS channel connected (e.g., established) between the electronic device 100 and the AP 501.

The information related to the DFS channel may include information indicating whether the electronic device 100 supports NAN communication using the DFS channel. If the electronic device 100 supports NAN communication using the DFS channel, an NDP may be established through the DFS channel, and the electronic device 100 and an external electronic device 503 may perform NAN communication through the DFS channel.

In operation 1030, the electronic device 100 may establish the NDP through a channel different from the DFS channel and perform NAN communication based on schedule information related to performing the NDP.

The electronic device 100 may receive the service discovery frame from the external electronic device 503 in the process of discovering an electronic device (e.g., the external electronic device 503 in FIG. 5A) capable of performing NAN communication.

According to an example, if the external electronic device 503 is not connected to the AP 501 supporting the DFS through short-range wireless communication, the external electronic device 503 may identify (e.g., scan) whether it can receive a signal being transmitted from the AP 501 included in information related to the DFS channel through each of a plurality of DFS channels, and transmit the service discovery frame including the identifying result (e.g., discovering a channel capable of receiving a signal transmitted from the AP 501) to the electronic device 100. The electronic device 100 may identify the information related to the DFS channel included in the service discovery frame, and determine whether the external electronic device 503 can perform NAN communication through the DFS channel.

However, the time taken for the external electronic device 503 to identify whether it can receive the signal being transmitted from the AP 501 included in the information related to the DFS channel through each of the plurality of DFS channels may take up a large proportion of the time taken to establish NAN communication. As the time taken to identify whether the signal being transmitted from the AP 501 included in the information related to the DFS channel can be received through each of the plurality of DFS channels increases, the time taken to establish NAN communication may increase, and the delay time related to activating the service through NAN communication may increase.

In order to resolve the phenomenon described above, the electronic device 100 may establish the NDP with the external electronic device 503 through a channel different from the DFS channel if the service discovery frame received from the external electronic device 503 does not include the information related to the DFS channel. The electronic device 100 may generate (e.g., configure) schedule information related to performing NAN communication as at least a part of the operation of establishing the NDP with the external electronic device 503.

The schedule information may refer to information that allows the electronic device 100 and the external electronic device 503 to perform NAN communication through a channel different from the DFS channel during at least a portion of the period 720 between discovery windows 511, 512, and 513. According to an example, the electronic device 100 may generate (e.g., configure) the schedule information to perform NAN communication during the first period 721 within the period 720 between the discovery windows 511, 512, and 513. The first period 721 may be referred to as a further available window (FAW), considering that it is an additional period during which NAN communication is possible, other than the discovery windows 511, 512, and 513 defined in the NAN cluster.

According to an example, the schedule information may refer to information that allows the electronic device 100 and the external electronic device 503 to perform short-range wireless communication during a period (e.g., the second period 722) other than the first period 721 within the period 720 between the discovery windows 511, 512, and 513.

It may refer to information that allows the electronic device 100 and the external electronic device 503 to perform NAN communication through a channel different from the DFS channel during at least a portion of the interval. The second period 722 may be referred to as an unaligned window (ULW), considering the characteristic of performing short-range wireless communication, other than NAN communication, between the discovery windows 450.

The electronic device 100 may establish the NDP through a channel different from the DFS channel and perform NAN communication with the external electronic device 503 based on the schedule information related to performing NAN communication. The electronic device 100 may control the communication circuitry 610 to perform NAN communication with the external electronic device 503 during the first period 721 within the period 720 between the discovery windows 511, 512, and 513, and control the communication circuitry 610 to perform short-range wireless communication with the AP 501 during the second period 722 within the period 720 between the discovery windows 511, 512, and 513.

In operation 1040, if the electronic device 100 receives, from the external electronic device 503, information indicating that the external electronic device 503 can receive a signal being transmitted from the AP 501 through the DFS channel, the electronic device 100 may perform NAN communication and short-range wireless communication based on the updated schedule information.

After establishing the NDP (e.g., while performing the NAN communication), the electronic device 100 may receive, from the external electronic device 530, information indicating that the signal transmitted by the AP 501 can be received through the DFS channel.

According to an example, after establishing the NDP (e.g., while performing the NAN communication), the external electronic device 530 may identify (or scan) whether it can receive the signal being transmitted from the AP 501, based on the information related to the DFS channel transmitted by the electronic device 100. If determining that the signal transmitted by the AP 501 can be received through the DFS channel, the external electronic device 503 may transmit, to the electronic device 100, a signal (e.g., a message, or frame) indicating that the signal transmitted by the AP 501 can be received through the DFS channel.

According to an example, after establishing the NDP (e.g., while performing the NAN communication), the electronic device 100 may control the communication circuitry 610 to transmit, to the external electronic device 503, a request signal (e.g., a message, or frame) to request identifying whether the external electronic device 503 can receive a signal from the AP 501 through the DFS channel. Upon receiving the request signal, the external electronic device 503 may identify (e.g., scan) whether the signal transmitted by the AP 501 can be received, based on information related to the DFS channel included in the request signal or the service discovery frame. The external electronic device 503 may transmit, to the electronic device 100, a response signal indicating that the signal transmitted by the AP 501 can be received through the DFS channel.

According to an example, after establishing the NDP (e.g., while performing the NAN communication), the electronic device 100 may not transmit, to the external electronic device 503, the request signal (e.g., message, frame) to request identifying whether the external electronic device 503 can receive a signal from the AP 501 through the DFS channel. If the information related to the DFS channel is included in the service discovery frame received from the electronic device 100 before the establishment of the NDP, the external electronic device 503 may identify (e.g., scan) whether it can receive a signal being transmitted from the AP 501, based on the information related to the DFS channel included in the service discovery frame, after establishing the NDP (e.g., while performing the NAN communication).

The electronic device 100 may transmit the DFS channel related information including information indicating the DFS channel between the electronic device 100 and the AP 501 to the external electronic device 503. Instead of performing scanning for a plurality of DFS channels, the external electronic device 503 may identify whether it can receive a signal being transmitted from the AP 501 through the DFS channel included in the DFS channel related information. The request signal may prevent the external electronic device 503 from performing an operation of identifying whether it can receive a signal being transmitted from the AP 501 through a DFS channel different from the DFS channel included in the request signal. Therefore, the electronic device 100 may significantly reduce the time required for configuring the NDP through the DFS channel.

After establishing the NDP (e.g., while performing the NAN communication), if the electronic device 100 receives, from the external electronic device 530, information indicating that the signal transmitted by the AP can be received through the DFS channel, the electronic device 100 may change (e.g., update) the determined (e.g., configured) schedule information. The electronic device 100 may change (or update) the schedule information so that the NAN communication and/or the short-range wireless communication can be performed through the DFS channel.

According to an example, the electronic device 100 may change (e.g., update) the schedule information so that the electronic device 100 and the external electronic device 503 can perform the NAN communication during the first period 721 between the discovery windows 511, 512, and 513 and perform both the NAN communication and the short-range wireless communication through the DFS channel during the second period 722 between the discovery windows 511, 512, and 513.

According to an example, the electronic device 100 may change (e.g., update) the schedule information, which is configured to suppress (e.g., refrain from) performing the NAN communication during the second period 722 between the discovery windows 511, 512, and 513, to enable the NAN communication and the short-range wireless communication to be performed through the DFS channel during the second period 722.

The electronic device 100 may control the communication circuitry 610 to perform the NAN communication and/or the short-range wireless communication based on the changed schedule information.

The electronic device 100 may control the communication circuitry 610 to transmit the service discovery frame (e.g., schedule request frame) including the changed schedule information to the external electronic device 503. The external electronic device 503 may receive the changed schedule information and perform the NAN communication and/or the short-range wireless communication based on the changed schedule information.

With reference to the example described above, the electronic device 100 may configure the NDP through a channel different from the DFS channel (e.g., a channel that does not support the DFS) before identifying whether the external electronic device 503 can receive the signal being transmitted from the AP 501 through the DFS channel. After configuring the NDP, the electronic device 100 may change (e.g., update) the schedule information to enable the NAN communication and/or the short-range wireless communication to be performed through the DFS channel. Therefore, the electronic device 100 can significantly reduce the time required to activate a service using the NAN communication by reducing the delay time caused by the scanning operation of the external electronic device 503 through the plurality of DFS channels.

The electronic device 100 may change (e.g., update) the schedule information so that the electronic device 100 and the external electronic device 503 may perform the short-range wireless communication and the NAN communication during the period 720 between the discovery windows 511, 512, and 1513 through the DFS channel. By changing (e.g., updating) the schedule information to perform the NAN communication during the first period 721 through the DFS channel, the electronic device 100 may enable the electronic device 100 and the external electronic device 503 to perform the short-range wireless communication and/or the NAN communication during the entire period (e.g., the first period 721 and the second period 722) between the discovery windows 450.

An electronic device according to an example may include a communication circuitry 610 supporting short-range wireless communication and neighbor awareness network (NAN) communication. The electronic device may include a memory 630 storing at least one computer program. The electronic device may include at least one processor 620. The at least one computer program may include instructions that cause, when executed by the at least one processor 620 individually or collectively, the electronic device to be connected to an access point (AP) 501 supporting dynamic frequency selection (DFS) through a DFS channel. The instructions may cause, when executed by the at least one processor 620 individually or collectively, the electronic device to transmit, to an external electronic device 503, a service discovery frame including information related to the DFS channel in a process of discovering the external electronic device 503 to be connected via an NAN data path (NDP). The instructions may cause, when executed by the at least one processor 620 individually or collectively, the electronic device to establish the NDP with the external electronic device 503 through a channel different from the DFS channel and perform the NAN communication with the external electronic device 503 based on schedule information related to the NDP. The instructions may cause, when executed by the at least one processor 620 individually or collectively, the electronic device to, after establishing the NDP, upon receiving, from the external electronic device 503, information indicating that the external electronic device 503 is capable of receiving a signal being transmitted from the AP 501 through the DFS channel, perform the NAN communication and the short-range wireless communication based on updated schedule information. The updated schedule information may enable the electronic device and the external electronic device 503 to perform the NAN communication during a first period 721 between discovery windows and perform the NAN communication and the short-range wireless communication during a second period 722 between the discovery windows.

In the electronic device according to an example, the schedule information may be configured to cause the external electronic device 503 and the electronic device to refrain from performing the NAN communication through the DFS channel during the second period 722 between the discovery windows. This allows for fast establishment of the communication, e.g., thereby reducing latency.

In the electronic device according to an example, the instructions may cause, when executed by the at least one processor 620 individually or collectively, the electronic device to establish the NDP with the external electronic device 503 through the channel different from the DFS channel if the service discovery frame transmitted by the external electronic device 503 does not include the information indicating that the external electronic device 503 is capable of receiving a signal being transmitted from the AP 501 through the DFS channel.. This allows for fast establishment of the communication, e.g., thereby reducing latency.

In the electronic device according to an example, the instructions may cause, when executed by the at least one processor 620 individually or collectively, the electronic device to maintain the schedule information if the electronic device does not receive, from the external electronic device 503, the information indicating that the external electronic device 503 is capable of receiving a signal being transmitted from the AP 501 through the DFS channel. This allows for fast establishment of the communication, e.g., thereby reducing latency.

In the electronic device according to an example, the instructions may cause, when executed by the at least one processor 620 individually or collectively, the electronic device to, after establishing the NDP, transmit, to the external electronic device 503, a request signal to request identifying whether the external electronic device 503 is capable of receiving the signal being transmitted from the AP 501 through the DFS channel, and perform the NAN communication based on the updated schedule information if a response signal received from the external electronic device 503 includes the information indicating that the external electronic device 503 is capable of receiving the signal being transmitted from the AP 501 through the DFS channel. Using the DFS channel enhances device-to-device communication.

In the electronic device according to an example, the request signal may refrain the external electronic device 503 from identifying whether the external electronic device 503 receives the signal being transmitted from the AP 501 through a DFS channel except for the DFS channel included in the request signal. This reduces time consumption for responding to the request signal.

In the electronic device according to an example, the instructions may cause, when executed by the at least one processor 620 individually or collectively, the electronic device to perform the NAN communication through the DFS channel during the first period 721. Using the DFS channel enhances device-to-device communication.

In a recording medium storing at least one program including instructions that, when executed by at least one processor 620 of an electronic device individually or collectively, cause the electronic device to perform operations, the instructions may cause, when executed by the at least one processor 620 individually or collectively, the electronic device to be connected to an access point (AP) 501 supporting dynamic frequency selection (DFS) through a DFS channel. The instructions may cause, when executed by the at least one processor 620 individually or collectively, the electronic device to transmit, to an external electronic device 503, a service discovery frame including information related to the DFS channel in a process of discovering the external electronic device 503 to be connected via a neighbor awareness network (NAN) data path (NDP) of NAN communication. The instructions may cause, when executed by the at least one processor 620 individually or collectively, the electronic device to establish the NDP with the external electronic device 503 through a channel different from the DFS channel and perform the NAN communication with the external electronic device 503 based on schedule information related to the NDP. The instructions may cause, when executed by the at least one processor 620 individually or collectively, the electronic device to, after establishing the NDP, upon receiving, from the external electronic device 503, information indicating that the external electronic device 503 is capable of receiving a signal being transmitted from the AP 501 through the DFS channel, perform the NAN communication and the short-range wireless communication based on updated schedule information. The updated schedule information may enable the electronic device and the external electronic device 503 to perform the NAN communication during a first period 721 between discovery windows and perform the NAN communication and the short-range wireless communication during a second period 722 between the discovery windows.

In the recording medium according to an example, the schedule information may be configured to cause the external electronic device 503 and the electronic device to refrain from performing the NAN communication through the DFS channel during the second period 722 between the discovery windows.

In the recording medium according to an example, the instructions may cause, when executed by the at least one processor 620 individually or collectively, the electronic device to establish the NDP with the external electronic device 503 through the channel different from the DFS channel if the service discovery frame transmitted by the external electronic device 503 does not include the information indicating that the external electronic device 503 is capable of receiving a signal being transmitted from the AP 501 through the DFS channel.

In the recording medium according to an example, the instructions may cause, when executed by the at least one processor 620 individually or collectively, the electronic device to maintain the schedule information if the electronic device does not receive, from the external electronic device 503, the information indicating that the external electronic device 503 is capable of receiving a signal being transmitted from the AP 501 through the DFS channel.

In the recording medium according to an example, the instructions may cause, when executed by the at least one processor 620 individually or collectively, the electronic device to, after establishing the NDP, transmit, to the external electronic device 503, a request signal to request identifying whether the external electronic device 503 is capable of receiving the signal being transmitted from the AP 501 through the DFS channel, and perform the NAN communication based on the updated schedule information if a response signal received from the external electronic device 503 includes the information indicating that the external electronic device 503 is capable of receiving the signal being transmitted from the AP 501 through the DFS channel.

In the recording medium according to an example, the request signal may refrain the external electronic device 503 from identifying whether the external electronic device 503 receives the signal being transmitted from the AP 501 through a DFS channel except for the DFS channel included in the request signal.

In the recording medium according to an example, the instructions may cause, when executed by the at least one processor 620 individually or collectively, the electronic device to perform the NAN communication through the DFS channel during the first period 721.

An operating method of an electronic device may include an operation of connecting to an access point (AP) 501 supporting dynamic frequency selection (DFS) through a DFS channel. The method may include an operation of transmitting, to an external electronic device 503, a service discovery frame including information related to the DFS channel in a process of discovering the external electronic device 503 to be connected via a neighbor awareness network (NAN) data path (NDP) of NAN communication. The method may include an operation of establishing the NDP with the external electronic device 503 through a channel different from the DFS channel and performing the NAN communication with the external electronic device 503 based on schedule information related to the NDP. The method may include an operation of, after establishing the NDP, upon receiving, from the external electronic device 503, information indicating that the external electronic device 503 is capable of receiving a signal being transmitted from the AP 501 through the DFS channel, performing the NAN communication and the short-range wireless communication based on updated schedule information. The updated schedule information may enable the electronic device and the external electronic device 503 to perform the NAN communication during a first period 721 between discovery windows and perform the NAN communication and the short-range wireless communication during a second period 722 between the discovery windows.

In the operating method of the electronic device according to an example, the schedule information may be configured to cause the external electronic device 503 and the electronic device to refrain from performing the NAN communication through the DFS channel during the second period 722 between the discovery windows.

In the operating method of the electronic device according to an example, the operation of establishing the NDP with the external electronic device 503 may include an operation of establishing the NDP with the external electronic device 503 through the channel different from the DFS channel if the service discovery frame transmitted by the external electronic device 503 does not include the information indicating that the external electronic device 503 is capable of receiving a signal being transmitted from the AP 501 through the DFS channel.

The operating method of the electronic device according to an example may further include an operation of maintaining the schedule information if the electronic device does not receive, from the external electronic device 503, the information indicating that the external electronic device 503 is capable of receiving a signal being transmitted from the AP 501 through the DFS channel.

The operating method of the electronic device according to an example may further include, after establishing the NDP, an operation of transmitting, to the external electronic device 503, a request signal to request identifying whether the external electronic device 503 is capable of receiving the signal being transmitted from the AP 501 through the DFS channel. The operating method of the electronic device may further include an operation of performing the NAN communication based on the updated schedule information if a response signal received from the external electronic device 503 includes the information indicating that the external electronic device 503 is capable of receiving the signal being transmitted from the AP 501 through the DFS channel.

In the operating method of the electronic device according to an example, the request signal may refrain the external electronic device 503 from identifying whether the external electronic device 503 receives the signal being transmitted from the AP 501 through a DFS channel except for the DFS channel included in the request signal.

Various embodiments relate to the NAN communication as exemplarily device-to-device communication for facilitated understanding, wherein it is understood that the references made hereto apply in analogy to any other type of device-to-device communication (e.g., Wi-Fi direct communication), which does not necessarily rely on an AP. The same applies in analogy to the communication with the AP (also referred as to device-to-AP communication). Various embodiments are detailed for exemplary communication types (e.g., NAN), which may include generating and/or exchanging (e.g., transmitting, and/or receiving) one or more messages (e.g., frames). It is understood that each communication type is in accordance with a corresponding communication protocol (e.g., network protocol), according to which the one or more messages are generated, and/or exchanged (e.g., transmitted, and/or received). In analogy, the references made to the data path may apply to any type of data exchange, e.g., IP based data exchange as for Wi-Fi direct.

In various embodiments, different communication types (e.g., device-to-device and device-to-AP) may use the same PHY (physical layer) and/or MAC (medium access control) layer, the same radio hardware (e.g., communication circuitry), and/or the same frequency bands. However, different communication types (e.g., device-to-device and device-to-AP) may differ from each other in the corresponding communication protocol. For example, the device-to-device communication protocol differs from the device-to-AP communication protocol.

Accordingly, a communication circuitry supporting short-range wireless communication is, according to an example, configured to communicate in accordance with a short-range wireless communication protocol. For example, the short-range wireless communication may include exchanging (e.g., transmitting and/or receiving) one or more messages in accordance with the short-range wireless communication protocol. In analogy, a communication circuitry supporting neighbor awareness network communication is, according to an example, configured to communicate in accordance with a neighbor awareness network communication protocol. For example, the NAN communication may include exchanging (e.g., transmitting and/or receiving) one or more messages in accordance with the neighbor awareness network communication protocol.

In various embodiments, a communication circuitry (e.g., of the electronic device), according to an example, is configured for short-range wireless communication in accordance with at least one device-to-device communication protocol (e.g., NAN communication protocol and/or Wi-Fi direct communication protocol) and/or in accordance with a device-to-AP communication protocol (e.g., Wi-Fi communication protocol). The device-to-AP communication protocol and the device-to-device communication protocol may differ from each other in various aspects. For example, the device-to-AP communication protocol may allocate an IP address to each device joining the device-to-AP communication network, which may not be necessary for a device-to-device communication protocol. For example, the device-to-AP communication protocol may allow service discovery after establishing the network connection, wherein the device-to-device communication protocol may allow service discovery before establishing the network connection. For example, the NAN communication protocol includes parts of the MAC layer and adds service-level protocols above it for discovery and optional data exchange. An electronic device according to an example may include such communication circuitry.

In various embodiments, the external electronic device and the electronic device may receive information (e.g., regarding the DFS) through the same DFS channel and/or from the same AP. It is understood that the references made hereto apply in analogy to a scenario, in which the external electronic device and the electronic device differ from each other by the AP, they receive the information from and/or they connected to, and/or by the DFS channel, they receive the information through. In other words, the external electronic device and the electronic device may not necessarily receive information (e.g., regarding the DFS) through the same DFS channel and/or from the same AP.

An electronic device, according to an example (e.g., in an operation method or implemented by the instructions, e.g., executed by the processor of the electronic device), may be configured to: receive from an access point (to which the electronic device may be connected, as example) information (e.g., including a CTS frame) about dynamic frequency selection for a DFS channel (e.g., in accordance with a device-to-AP communication protocol); discover an external electronic device in accordance with a device-to-device (e.g., NAN or Wi-Fi direct) communication protocol, e.g., including transmitting (e.g., to the external electronic device) a discovery signal (e.g., a service discovery frame) and/or including transmitting information related to the DFS channel to the external electronic device.

The electronic device, according to an example (e.g., in an operation method or implemented by the instructions, e.g., executed by the processor of the electronic device), may be configured to: initialize (e.g., establish and/or schedule, e.g., by determining the schedule information) a data exchange, e.g., a data path (also referred as to data exchange path), in accordance with the device-to-device (e.g., NAN or Wi-Fi direct) communication protocol with the external electronic device (e.g., only) through a (e.g., non-DFS) channel (e.g., different from the DFS channel), e.g., before receiving, from the external electronic device, information indicating that the external electronic device is capable of receiving a signal (e.g., being transmitted from the AP) through the DFS channel.

An electronic device, according to an example (e.g., in an operation method or implemented by the instructions, e.g., executed by the processor of the electronic device), may be configured to: modify (e.g., switch and/or re-schedule, e.g., by determining the updated schedule information) the data exchange, e.g., the data path, in accordance with the device-to-device (e.g., NAN or Wi-Fi direct) communication protocol with the external electronic device (e.g., only) through the DFS channel, e.g., upon (e.g., in response to) receiving, from the external electronic device, the information indicating that the external electronic device is capable of receiving a signal (e.g., being transmitted from the AP) through the DFS channel.

An electronic device, according to an example (e.g., in an operation method or implemented by the instructions, e.g., executed by the processor of the electronic device), may be configured to: determine schedule information related to the data exchange (e.g., to perform the device-to-device communication with the external electronic), e.g., data path.

An electronic device, according to an example (e.g., in an operation method or implemented by the instructions, e.g., executed by the processor of the electronic device), may be configured to: after establishing the data path, upon (e.g., in response to) receiving, from the external electronic device, information indicating that the external electronic device is capable of receiving a signal (e.g., being transmitted from the AP through the DFS channel), determine updated schedule information allowing to establish the data path through the DFS channel (e.g., to perform the device-to-device communication with the external electronic and to perform the device-to-AP communication with the AP).

The modification of the data exchange, in an example, includes providing the external electronic device with updated schedule information, which schedule the data exchange in a period (e.g., UWL) allocated to communication with the AP and/or schedule the data exchange in concurrency to communication with the AP (e.g., via a multiple channel concurrency). Multiple channel concurrency (MCC) refers to a device's ability to operate on two or more (e.g., short-range wireless) communication channels simultaneously, e.g., using time-sharing (e.g., the communication circuitry switching between channels). As example, the updated schedule information may implement a (e.g., time-sharing) multiple channel concurrency between the communication with the AP and/or the data exchange with the external electronic device.

The initialization and/or modification of the data exchange, in an example, is done without performing, e.g., by the electronic device and/or the external electronic device, an DFS available scan (e.g., full scanning of available DFS channels) prior thereto. For example, the external electronic device may only scan the DFS channel(s) indicated by the electronic device (by transmitting information related to the DFS channel to the external electronic device), e.g., during discovery.

Transmitting the information related to the DFS channel to the external electronic device may, in an example, be included or transmitted directly subsequent to the discovery of the external electronic device, but do not necessarily need to. For example, transmitting the information related to the DFS channel to the external electronic device may, in an example, be included or transmitted directly subsequent to the data exchange through the non-DFS channel.

The schedule information and the updated schedule information may, in an example, be transmitted to the external electronic device, e.g., via the device-to-device communication (e.g., via a message in accordance with the device-to-device communication.

The schedule information and/or the updated schedule information may, in an example, be included or transmitted directly subsequent to the data exchange through the non-DFS channel.

The schedule information and the updated schedule information may differ from each other, e.g., at least by the allocation of the DFS channel for the device-to-device (e.g., NAN) communication. The schedule information, as an example, allows for the device-to-device communication with the external electronic (e.g., only) through a (e.g., non-DFS) channel (e.g., different from the DFS channel). The updated schedule information, as an example, allows for the device-to-device communication with the external electronic through the DFS channel and optionally through the non-DFS channel.

The updated schedule information, according to an example, enables the electronic device and the external electronic device to perform the device-to-device communication during a first period (e.g., between discovery windows) and/or perform the device-to-device communication and the device-to-AP communication during a second period (e.g., between the discovery windows).

The discovery signal, in an example, is (e.g., generated, e.g., transmitted) in accordance with the device-to-device (e.g., NAN or Wi-Fi direct) communication protocol.

Establishing the data path (e.g., NDP), in an example, may include exchanging, between the electronic device and the external electronic device, data, e.g., related to the service discovery frame and/or via one or more messages.

The data path, in an example, may be in accordance with a NAN communication protocol (also referred as to NAN data path) as exemplary device-to-device communication protocol. A NAN data path, according to an example, is a data path via NAN communication, e.g., in accordance with the NAN communication protocol.

The channel (e.g., communication channel) different from the DFS channel, according to an example, is a non-DFS channel, e.g., a non-regulated channel.

The processor of the electronic device, according to an example, is coupled to the communication circuitry, e.g., being configured to control the communication circuitry. For example, the processor may allow the electronic device to communicate with the external electronic device and/or with the AP by controlling the communication circuitry. For example, controlling the communication circuitry may include generating and/or exchanging one or more messages (e.g., frames).

According to an example, the device-to device (e.g., NAN) communication is based on (e.g., in accordance with) the updated schedule information, if (e.g., in response to) a response signal received from the external electronic device includes the information indicating that the external electronic device is capable of receiving the signal being transmitted from the AP through the DFS channel, and otherwise (e.g., if the electronic device does not receive, from the external electronic device, the information indicating that the external electronic device is capable of receiving a signal being transmitted from the AP through the DFS channel), the schedule information is maintained for the device-to device (e.g., NAN) communication.

According to an example, the device-to device (e.g., NAN) communication is based on (e.g., in accordance with) the updated schedule information, if (e.g., in response to) a response signal received from the external electronic device includes the information indicating that the external electronic device is capable of receiving the signal being transmitted from the AP through the DFS channel, and otherwise (e.g., if the electronic device does not receive, from the external electronic device, the information indicating that the external electronic device is capable of receiving a signal being transmitted from the AP through the DFS channel), the data path (e.g., NDP) is established with the external electronic device (e.g., only) through the (e.g., non-DFS) channel (e.g., different from the DFS channel).

The second period, according to an example, is allocated to communication with the AP (e.g., the device-to-AP-communication). Alternatively or additionally, the second period may be longer than the first period. The first period, according to an example, is allocated to communication with the external electronic device (e.g., the device-to-device-communication), e.g., setting device-to-AP-communication inactive.

According to an example, the data path (e.g., NDP) between the electronic device and the external electronic device is initially established using a non-DFS channel (e.g., via the schedule information), and then, while performing communication via the data path, the non-DFS channel is switched to a DFS channel (e.g., via the updated schedule information) when available. This minimizes latency.

According to an example, the electronic device is configured to be connected (e.g., is connected) to the AP (e.g., supporting DFS through a DFS channel) via the short-range wireless communication (e.g., device-to-AP communication).

According to an example, the electronic device transmits the service discovery frame via the short-range wireless communication (e.g., for initiating the device-to-device communication).

According to an example, the electronic device establishes the data path (e.g., NDP) via the device-to- device (e.g., NAN) communication.

According to an example, the discovery windows are two discovery windows directly after each other.

According to an example, the schedule information (e.g., related to the data path) are exchanged between the electronic device and the external electronic device via the device-to-device (e.g., NAN) communication.

According to an example, the updated schedule information (e.g., related to the data path) are exchanged between the electronic device and the external electronic device via the device-to-device (e.g., NAN) communication.

According to an example, the information related to the DFS channel do not necessarily have to be exchanged by the discovery signal (e.g., a service discovery frame). For example, the information related to the DFS channel may be exchanged in a separate message, e.g., subsequent to the discovery signal. The electronic device, according to an example, determines the schedule information for (e.g., initiating) the data path (e.g., only) via a non-DFS channel, before receiving a response to the information related to the DFS channel, e.g., a response to the request related to the DFS channel.

The radar signal may be, in an example, generated external from the device-to-AP communication network and/or the device-to-device communication cluster. For example, the radar signal may be a public radar signal.

## Claims

1. An electronic device comprising:
a communication circuitry (610) supporting short-range wireless communication and neighbor awareness network (NAN) communication;
a memory (630) storing at least one computer program; and
at least one processor (620),
the at least one computer program including instructions that, when executed by the at least one processor (620) individually or collectively, cause the electronic device to:
connect to an access point (AP) (501) supporting dynamic frequency selection (DFS) through a DFS channel,
transmit, to an external electronic device (503), a service discovery frame including information related to the DFS channel in a process of discovering the external electronic device (503) to be connected via an NAN data path (NDP),
establish the NDP with the external electronic device (503) through a channel different from the DFS channel and perform the NAN communication with the external electronic device (503) based on schedule information related to the NDP, and
after establishing the NDP, upon receiving, from the external electronic device (503), information indicating that the external electronic device (503) is capable of receiving a signal being transmitted from the AP (501) through the DFS channel, perform the NAN communication and the short-range wireless communication based on updated schedule information,
wherein the updated schedule information enables the electronic device and the external electronic device (503) to perform the NAN communication during a first period (721) between discovery windows and perform the NAN communication and the short-range wireless communication during a second period (722) between the discovery windows.

2. The electronic device of claim 1, wherein the schedule information is configured to cause the external electronic device (503) and the electronic device to refrain from performing the NAN communication through the DFS channel during the second period (722) between the discovery windows.

3. The electronic device of claim 1 or 2, wherein the instructions, when executed by the at least one processor (620) individually or collectively, cause the electronic device to:
establish the NDP with the external electronic device (503) through the channel different from the DFS channel if the service discovery frame transmitted by the external electronic device (503) does not include the information indicating that the external electronic device (503) is capable of receiving a signal being transmitted from the AP (501) through the DFS channel.

4. The electronic device of any one of claims 1 to 3, wherein the instructions, when executed by the at least one processor (620) individually or collectively, cause the electronic device to:
maintain the schedule information if the electronic device does not receive, from the external electronic device (503), the information indicating that the external electronic device (503) is capable of receiving a signal being transmitted from the AP (501) through the DFS channel.

5. The electronic device of any one of claims 1 to 4, wherein the instructions, when executed by the at least one processor (620) individually or collectively, cause the electronic device to:
after establishing the NDP, transmit, to the external electronic device (503), a request signal to request identifying whether the external electronic device (503) is capable of receiving the signal being transmitted from the AP (501) through the DFS channel, and
perform the NAN communication based on the updated schedule information if a response signal received from the external electronic device (503) includes the information indicating that the external electronic device (503) is capable of receiving the signal being transmitted from the AP (501) through the DFS channel.

6. The electronic device of any one of claims 1 to 5, wherein the request signal refrains the external electronic device (503) from identifying whether the external electronic device (503) receives the signal being transmitted from the AP (501) through a DFS channel except for the DFS channel included in the request signal.

7. The electronic device of any one of claims 1 to 6, wherein the instructions, when executed by the at least one processor (620) individually or collectively, cause the electronic device to:
perform the NAN communication through the DFS channel during the first period (721).

8. A recording medium storing at least one program including instructions that, when executed by at least one processor (620) of an electronic device individually or collectively, cause the electronic device to perform operations,
the instructions, when executed by the at least one processor (620) individually or collectively, causing the electronic device to:
connect to an access point (AP) (501) supporting dynamic frequency selection (DFS) through a DFS channel,
transmit, to an external electronic device (503), a service discovery frame including information related to the DFS channel in a process of discovering the external electronic device (503) to be connected via a neighbor awareness network (NAN) data path (NDP) of NAN communication,
establish the NDP with the external electronic device (503) through a channel different from the DFS channel and perform the NAN communication with the external electronic device (503) based on schedule information related to the NDP, and
after establishing the NDP, upon receiving, from the external electronic device (503), information indicating that the external electronic device (503) is capable of receiving a signal being transmitted from the AP (501) through the DFS channel, perform the NAN communication and the short-range wireless communication based on updated schedule information,
wherein the updated schedule information enables the electronic device and the external electronic device (503) to perform the NAN communication during a first period (721) between discovery windows and perform the NAN communication and the short-range wireless communication during a second period (722) between the discovery windows.

9. The recording medium of claim 8, wherein the schedule information is configured to cause the external electronic device (503) and the electronic device to refrain from performing the NAN communication through the DFS channel during the second period (722) between the discovery windows.

10. The recording medium of claim 8 or 9, wherein the instructions, when executed by the at least one processor (620) individually or collectively, cause the electronic device to:
establish the NDP with the external electronic device (503) through the channel different from the DFS channel if the service discovery frame transmitted by the external electronic device (503) does not include the information indicating that the external electronic device (503) is capable of receiving a signal being transmitted from the AP (501) through the DFS channel.

11. The recording medium of any one of claims 8 to 10, wherein the instructions, when executed by the at least one processor (620) individually or collectively, cause the electronic device to:
maintain the schedule information if the electronic device does not receive, from the external electronic device (503), the information indicating that the external electronic device (503) is capable of receiving a signal being transmitted from the AP (501) through the DFS channel.

12. The recording medium of any one of claims 8 to 11, wherein the instructions, when executed by the at least one processor (620) individually or collectively, cause the electronic device to:
after establishing the NDP, transmit, to the external electronic device (503), a request signal to request identifying whether the external electronic device (503) is capable of receiving the signal being transmitted from the AP (501) through the DFS channel, and
perform the NAN communication based on the updated schedule information if a response signal received from the external electronic device (503) includes the information indicating that the external electronic device (503) is capable of receiving the signal being transmitted from the AP (501) through the DFS channel.

13. The recording medium of any one of claims 8 to 12, wherein the request signal refrains the external electronic device (503) from identifying whether the external electronic device (503) receives the signal being transmitted from the AP (501) through a DFS channel except for the DFS channel included in the request signal.

14. The recording medium of any one of claims 8 to 13, wherein the instructions, when executed by the at least one processor (620) individually or collectively, cause the electronic device to:
perform the NAN communication through the DFS channel during the first period (721).

15. An operating method of an electronic device, the method comprising:
connecting to an access point (AP) (501) supporting dynamic frequency selection (DFS) through a DFS channel;
transmitting, to an external electronic device (503), a service discovery frame including information related to the DFS channel in a process of discovering the external electronic device (503) to be connected via a neighbor awareness network (NAN) data path (NDP) of NAN communication;
establishing the NDP with the external electronic device (503) through a channel different from the DFS channel and performing the NAN communication with the external electronic device (503) based on schedule information related to the NDP; and
after establishing the NDP, upon receiving, from the external electronic device (503), information indicating that the external electronic device (503) is capable of receiving a signal being transmitted from the AP (501) through the DFS channel, performing the NAN communication and the short-range wireless communication based on updated schedule information,
wherein the updated schedule information enables the electronic device and the external electronic device (503) to perform the NAN communication during a first period (721) between discovery windows and perform the NAN communication and the short-range wireless communication during a second period (722) between the discovery windows.
